# EUROPEAN PATENT SPECIFICATION

(11) **EP 2 999 157 B1**
(45) Date of publication and mention of the grant of the patent: **22.02.2017**
(21) Application number: 13884641.5
(22) Date of filing: 16.05.2013
(51) Int. Cl.: H04L 9/16, H04W 12/00, H04W 28/02, H04L 9/08, H04W 4/18, H04W 12/02, H04L 29/06

(54) **TERMINAL DEVICE, COMMUNICATION SYSTEM, AND COMMUNICATION CONTROL PROGRAM**
ENDGERÄTEVORRICHTUNG, KOMMUNIKATIONSSYSTEM UND KOMMUNIKATIONSSTEUERUNGSPROGRAMM
DISPOSITIF TERMINAL, SYSTÈME DE COMMUNICATION, ET PROGRAMME DE COMMUNICATION

(43) Date of publication of application: 23.03.2016
(73) Proprietor: FUJITSU LIMITED, Kawasaki-shi Kanagawa 211-8588 (JP)
(72) Inventor: FURUTA, Daitarou, Kawasaki-shi Kanagawa 211-8588 (JP)
(74) Representative: Wilding, Frances Ward
(86) International application number: PCT/JP2013/063724
(87) International publication number: WO 2014/184938

(56) References cited:
- EP-A1- 2 416 521
- EP-A1- 2 466 523
- WO-A1-2011/064858
- JP-A- 2004 064 652
- JP-A- 2004 254 286
- JP-A- 2013 015 605
- US-A1- 2004 136 533
- US-A1- 2009 319 771
- US-A1- 2012 039 464
- "3rd Generation Partnership Project; Technical Specification Group Services and System Aspects; 3GPP System Architecture Evolution (SAE); Security architecture (Release 9)", 3GPP STANDARD; 3GPP TS 33.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.4.0, 16 June 2010 (2010-06-16), pages 1-104, XP050441881, [retrieved on 2010-06-16]

## Description

### Technical Field

The present invention relates to a terminal device, a communication system, and a communication control program.

### Background Art

In a communication system such as a mobile communication system, encryption/decryption processing is performed, using a predetermined encryption key or an encryption scheme, in order to protect information from a threat such as bugging, modification, or the like by a third party. That is, a transmitting end performs encryption of information, using the predetermined encryption key or the encryption scheme, before inputting information on a wired or wireless transmission channel. A receiving end performs decryption of information, using a predetermined encryption key (decryption key) or an encryption scheme, upon receiving the encrypted information output from the wired or wireless transmission channel.

Patent Literature 1 proposes a technology in which in wireless communication between a mobile body including a wireless communication unit, and a wireless base station, in order to maintain security strength in communication, an encryption key used for encryption/decryption processing of communication data is updated in association with travel of the mobile body.

Patent Literature 2 proposes a technology in which, in order to avoid spread of damage caused by decoding an encryption key by a third party during transmission, when content such as video or sound is transmitted or received through a network, an encryption scheme used for encryption/decryption processing of the content is changed, each time content to be transmitted is switched, at each predetermined time or each time content of predetermined size is transmitted.

Patent Literature 3 proposes a technology in which in order to prevent deterioration in communication quality which is caused by delayed data or lost data due to computing resource depletion resulting from a load of encryption/decryption processing, a communication condition changing by time is obtained every time data is transmitted, and information about an encryption level which is determined according to the obtained communication condition is transmitted by being added to a header of encryption data.

Patent Literature 4 proposes a technology in which, when a user uses a communication application to transmit data to another device, a usable cryptographic algorithm is selected based on a remaining battery level and a scheduled communication time.

Patent Literature 5 discloses an emergency call-based security algorithm negotiation method and apparatus. The method comprises the following steps: after receiving an attachment request from a User Equipment (UE) and determining that the attachment request is an emergency attachment request, a network side sets UE security capabilities to support a null algorithm only; or, the network side determines that the UE security capabilities included in the attachment request support the null algorithm only; performing Non-Access Stratum (NAS) and Access Stratum (AS) selection processing taking the null algorithm as a security algorithm for the user equipment.

Patent Literature 6 discloses a method for determining separate encryption algorithms for user plane and control plane.

### Citation List

### Patent Literature

Patent Literature 1: Japanese Laid-open Patent Publication No. 2006-129432
Patent Literature 2: Japanese Laid-open Patent Publication No. 2008-113172
Patent Literature 3: Japanese Laid-open Patent Publication No. 2004-064652
Patent Literature 4: Japanese Laid-open Patent Publication No. 2005-117232
Patent Literature 5: US2012/039464A1 Patent Literature 6: EP2416521

### Summary of invention

### Technical Problem

In development of a communication system, the concept of protocol stack is introduced in which a plurality of processes is hierarchically implemented. Therefore, an interface between nodes or hierarchies is defined in specifications, and layers are allowed to be independent of each other in design and implementation. However, in a plurality of different layers, encryption/decryption processing may overlap in design and implementation. For example, in 3rd generation partnership project radio access network long term evolution (3GPP LTE) (hereinafter, may be abbreviated to "LTE") as mobile communication standard, the encryption/decryption processing is performed in a packet data convergence protocol (PDCP) layer corresponding to a sublayer of a layer 2 of the protocol stack. Further, the encryption scheme used for the LTE includes three encryption schemes, i.e., "SNOW-3G","AES","KASUMI", in higher order of confidentiality. In these encryption schemes, as the confidentiality is increased, the calculation amount of encryption is increased, and thus power consumption is increased.

A terminal device (hereinafter, may be abbreviated to "terminal") reports an encryption scheme of any of the three encryption schemed, capable of being processed by the terminal itself to a mobility management entity (MME) through a base station apparatus (hereinafter, may be abbreviated to "base station"), using a capability list representing the capability of the terminal itself. The MME selects any one of the encryption schemes included in the capability list reported from the terminal, and gives an instruction to the terminal. The terminal receiving the instruction encrypts data according to the instruction, using the encryption scheme determined by the MME, in a PDCP layer, and transmits the data to the base station.

Conventionally, the MME compares an encryption scheme capable of being processed by the base station, and the encryption schemes included in the capability list from the terminal, and selects, for example an encryption scheme having a highest confidentiality from the encryption schemes capable of being processed by both of the base station and the terminal. That is, when the terminal can corresponds to the three encryption schemes, i.e., SNOW-3G, AES, and KASUMI, the MME selects the SNOW-3G having the highest confidentiality. Conventionally, the thus selected encryption scheme is not switched to another encryption scheme, during connection between the terminal and the base station. That is, conventionally, an encryption scheme having the largest calculation amount and power consumption is selected by the MME from the encryption schemes capable of being processed by the terminal, and the selected encryption scheme is fixedly used, from when the terminal and the base station are connected (attached) to when the terminal and the base station are disconnected (detached).

Here, in an LTE terminal, sometimes encryption is further performed in a layer higher than the PDCP layer. For example, when voice over Internet protocol (VoIP) communication is performed by the LTE terminal, encryption using security architecture for Internet protocol (IPsec) is further performed, in a network layer of the protocol stack. That is, in a conventional terminal performing the VoIP communication, primary encryption using the IPsec is performed in the network layer, and further secondary encryption using the SNOW-3G is performed for the primary encrypted data, in the PDCP layer.

Use of the IPsec also allows securement of confidentiality of data in a wireless section similar to a wired section, so that encryption of the data encrypted using the IPsec, using the SNOW-3G may be excessive encryption. Further, such repeated encryption performed using an encryption scheme or an encryption key having the largest power consumption, (e.g., SNOW-3G) may be undesirable in view of power saving.

As described above, in the conventional terminal of a communication system such as LTE, although encryption/decryption processing is sometimes performed in a plurality of layers (e.g., lower layer such as the PDCP layer, upper layer such as an IP layer), an encryption scheme having the highest confidentiality, i.e., an encryption scheme having the largest power consumption, is determined by the MME and used, selected from the encryption schemes capable of being processed by the terminal itself.

However, in the communication system developed by introducing the concept of protocol stack, the interface between nodes or hierarchies is defined in standard specifications, so that it is hard to change the specifications of the interface between nodes or hierarchies. Even if the standard specifications can be changed, the number of devices to be modified in compliance with changed standard specifications is increased, and it is feared that cost of development increases. Further, since an upper layer such as an application layer tends to have a larger number of programs to be implemented, it is feared that the cost of development is increased.

The disclosed technology has been made in view of the above, and it is an object of the disclosed technology to provide a terminal, a communication system, and a communication control program which save power in encryption.

### Solution to Problem

The invention is defined in the independent claims. Optional embodiments are set out in the dependent claims.

In a disclosed mode, a protocol stack includes an upper layer and a lower layer, and the terminal device performs first encryption in the upper layer, and performs second encryption in the lower layer, and the terminal device determines an encryption level of the second encryption according to a condition of the terminal device, and transmits notification of the determined encryption level to a base station.

According to a disclosed mode, power can be saved in encryption.

### Brief Description of Drawings

FIG. 1 is a diagram illustrating an exemplary configuration of a communication system according to a first embodiment.
FIG. 2 is a functional block diagram illustrating a main configuration of a terminal according to the first embodiment.
FIG. 3 is a functional block diagram illustrating a main configuration of a base station according to the first embodiment.
FIG. 4 is a functional block diagram illustrating a main configuration of an MME according to the first embodiment.
FIG. 5 is a table for description of an encryption level according to the first embodiment.
FIG. 6 is a diagram illustrating an exemplary threshold table according to the first embodiment.
FIG. 7 is an explanatory flowchart illustrating processing operation of the terminal according to the first embodiment.
FIG. 8 is a diagram illustrating an exemplary configuration of a terminal according to a second embodiment.
FIG. 9A is a sequence diagram illustrating exemplary processing operation of a communication system according to a third embodiment.
FIG. 9B is a sequence diagram illustrating exemplary processing operation of a communication system according to the third embodiment.
FIG. 10A is a sequence diagram illustrating an exemplary processing operation of a communication system according to a fourth embodiment.
FIG. 10B is a sequence diagram illustrating an exemplary processing operation of the communication system according to the fourth embodiment.
FIG. 11 is a sequence diagram illustrating an exemplary processing operation of a communication system according to a fifth embodiment.
FIG. 12A is a sequence diagram illustrating exemplary processing operation of a communication system according to a sixth embodiment.
FIG. 12B is a sequence diagram illustrating exemplary processing operation of the communication system according to the sixth embodiment.
FIG. 13A is a sequence diagram illustrating an exemplary processing operation of a communication system according to a seventh embodiment.
FIG. 13B is a sequence diagram illustrating an exemplary processing operation of the communication system according to the seventh embodiment.
FIG. 14A is a sequence diagram illustrating an exemplary processing operation of a communication system according to an eighth embodiment.
FIG. 14B is a sequence diagram illustrating an exemplary processing operation of the communication system according to the eighth embodiment.
FIG. 14C is a sequence diagram illustrating an exemplary processing operation of the communication system according to the eighth embodiment.
FIG. 15 is a functional block diagram illustrating a main configuration of a terminal according to a ninth embodiment.

### Embodiments for Carrying Out the Invention

Embodiments of a terminal, a communication system, and a communication control program disclosed in the present application will be described below in detail based on the drawings. The terminal, the communication system, and the communication control program disclosed in the present application are not limited to these embodiments. Further, in the embodiments, configurations having the same function and steps of the same processing are denoted by the same reference signals, and repeated description will be omitted.

Further, in the following embodiments, description will be made using an example of an LTE communication system. However, a communication system to which the disclosed technology can be applied is not limited to the LTE communication system. The disclosed technology can be also applied to another communication system such as universal mobile telecommunications system (UMTS).

### [First embodiment]

### <Exemplary configuration of communication system>

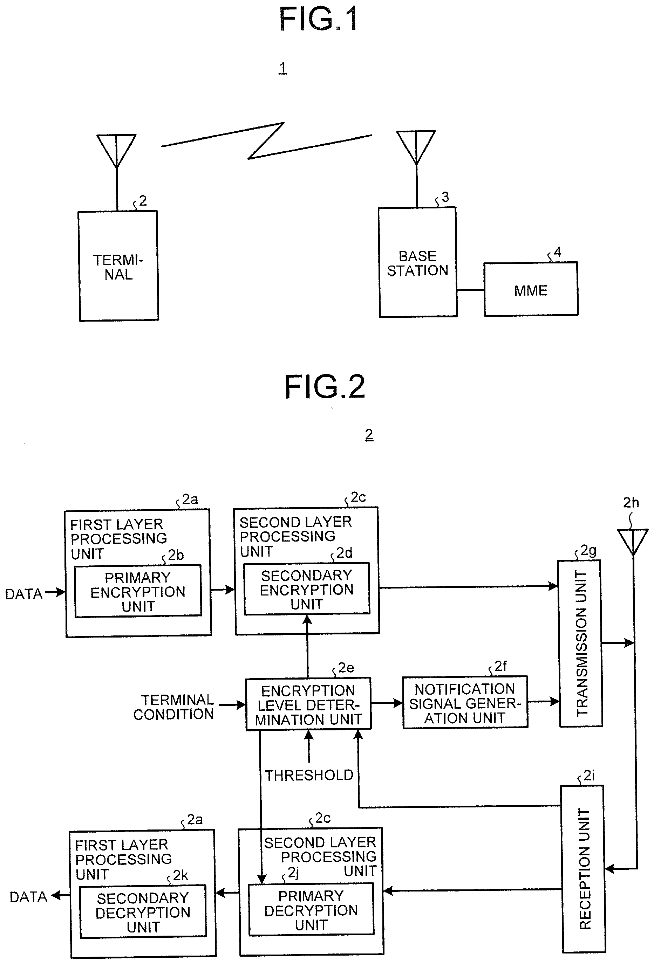

FIG. 1 is a diagram illustrating an exemplary configuration of the communication system according to a first embodiment. In FIG. 1, a communication system 1 includes a terminal 2, a base station 3, and an MME 4.

### <Exemplary configuration of terminal>

FIG. 2 is a functional block diagram illustrating a main configuration of the terminal according to the first embodiment. In FIG. 2, the terminal 2 includes first layer processing units 2a, second layer processing units 2c, an encryption level determination unit 2e, a notification signal generation unit 2f, a transmission unit 2g, an antenna 2h, and a reception unit 2i. Further, the first layer processing units 2a include a primary encryption unit 2b and a secondary decryption unit 2k, respectively, and the second layer processing units 2c include a secondary encryption unit 2d and a primary decryption unit 2j, respectively.

The first layer processing units 2a perform processing based on a protocol of a first layer of a protocol stack. The primary encryption unit 2b can perform encryption in the first layer, i.e., primary encryption, on data input to the first layer processing unit 2a on a transmitting end. Further, the secondary decryption unit 2k can perform decryption in the first layer, i.e., secondary decryption, on data input to the first layer processing unit 2a on a receiving end.

The second layer processing units 2c perform processing based on a protocol of a second layer of the protocol stack. The secondary encryption unit 2d can perform encryption in the second layer, i.e., secondary encryption, on data input to the second layer processing unit 2c on the transmitting end. Further, the primary decryption unit 2j can perform decryption in the second layer, i.e., primary decryption, on data input to the second layer processing unit 2c on the receiving end.

That is, in the terminal 2, data may be repeatedly encrypted in both of the first layer and the second layer.

Here, the first layer is preferably any layer higher than the second layer, and the second layer is preferably any layer lower than the first layer. That is, the first layer corresponds to an upper layer, and the second layer corresponds to a lower layer. For example, the first layer includes a network layer, and the second layer includes a PDCP layer. Further, for example, layers equal to or higher than a transport layer may be defined as the upper layer, and layers lower than the transport layer, that is, equal to or lower than an IP layer may be defined as the lower layer.

The encryption level determination unit 2e obtains a "terminal condition" and a threshold, and determines an encryption level of the secondary encryption unit 2d, and a decryption level of the primary decryption unit 2j, according to the terminal condition. The decryption level of the primary decryption unit 2j is equal to the encryption level of the secondary encryption unit 2d. The encryption level determination unit 2e outputs the determined encryption level to the notification signal generation unit 2f.

Here, the "terminal condition" represents various conditions which can be detected by the terminal 2. For example, the terminal status includes a radio quality between the terminal 2 and the base station 3, a Redirection count, an operation rate of a processor included in the terminal 2, a packet loss rate, or a count of handover caused by a handover command.

The notification signal generation unit 2f generates a notification signal (hereinafter, sometimes referred to as "encryption level notification signal") for notifying of the encryption level determined by the encryption level determination unit 2e, and outputs the notification signal to the transmission unit 2g. That is, the notification signal generation unit 2f generates an encryption level notification signal so that the encryption level determined by the encryption level determination unit 2e is finally determined by the MME 4 highly possibly, and outputs the encryption level notification signal to the transmission unit 2g. For example, the encryption level notification signal is output to the transmission unit 2g. The encryption level notification signal represents that the terminal 2 supports only an encryption scheme relating to the determined encryption level. The encryption level is one type of terminal capability of the terminal 2, so that the notification signal generation unit 2f may report the encryption level as terminal capability information.

The transmission unit 2g transmits, to the base station 3, data input through the first layer processing unit 2a and the second layer processing unit 2c, and the encryption level notification signal input from the notification signal generation unit 2f, through the antenna 2h.

The base station 3 transfers the received encryption level notification signal to the MME 4. The MME 4 finally determines encryption levels of the terminal 2 and the base station 3, based on the encryption level notified of using the encryption level notification signal, and transmits information about the determined encryption level (hereinafter, sometimes referred to as "encryption level information") to the terminal 2 through the base station 3. The encryption level of the terminal 2 is equal to the decryption level of the base station 3, and the decryption level of the terminal 2 is equal to the encryption level of the base station 3.

The reception unit 2i receives the encryption level information determined by the MME 4 through the antenna 2h, and outputs the received encryption level information to the encryption level determination unit 2e. Further, the reception unit 2i outputs data received from the base station 3 through the antenna 2h to the second layer processing unit 2c.

The encryption level determination unit 2e sets the encryption level finally determined by the MME 4 to the secondary encryption unit 2d, based on the input encryption level information. Further, the encryption level determination unit 2e sets the decryption level equal to the encryption level set to the secondary encryption unit 2d to the primary decryption unit 2j. The encryption level determination unit 2e activates an encryption/decryption module corresponding to the set level, but stops for example supply of an operation clock to an encryption/decryption module not corresponding to the set level to reduce power consumption.

The encryption level determination unit 2e may set the encryption level and the decryption level determined according to the terminal condition to the secondary encryption unit 2d and the primary decryption unit 2j. In this configuration, the encryption level information is not required to set the encryption level and the decryption level to the secondary encryption unit 2d and the primary decryption unit 2j, and the encryption level determination unit 2e may discard the input encryption level information.

### <Exemplary configuration of base station>

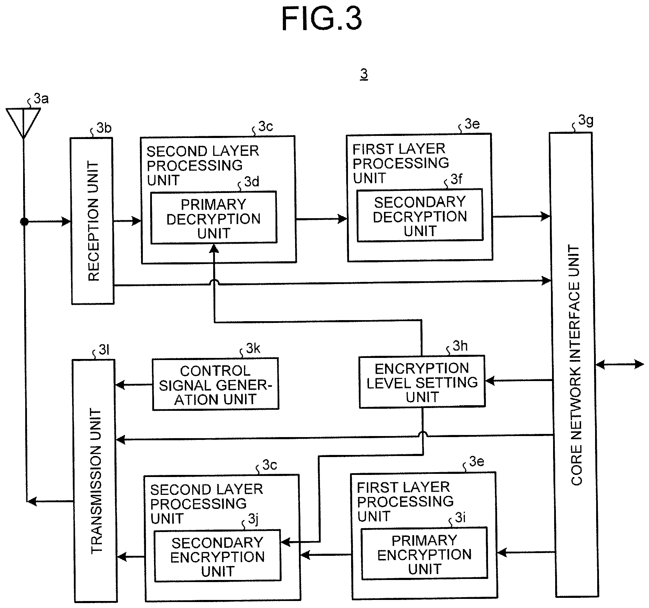

FIG. 3 is a functional block diagram illustrating a main configuration of the base station according to the first embodiment. In FIG. 3, the base station 3 includes an antenna 3a, a reception unit 3b, second layer processing units 3c, first layer processing units 3e, a core network interface unit 3g, an encryption level setting unit 3h, a control signal generation unit 3k, and a transmission unit 31. Further, the first layer processing units 3e include a primary encryption unit 3i and a secondary decryption unit 3f, respectively, and the second layer processing units 3c include a secondary encryption unit 3j and a primary decryption unit 3d, respectively.

The reception unit 3b outputs data received from the terminal 2 through the antenna 3a to the second layer processing unit 3c. Further, the reception unit 3b outputs the encryption level notification signal received from the terminal 2 through the antenna 3a to the core network interface unit 3g.

The second layer processing units 3c perform processing based on a protocol of the second layer of the protocol stack. The primary decryption unit 3d can perform decryption in the second layer, i.e., primary decryption, on data input to the second layer processing unit 3c on a receiving end. Further, the secondary encryption unit 3j can perform encryption in the second layer, i.e., secondary encryption, on data input to the second layer processing unit 3c on a transmitting end.

The first layer processing units 3e perform processing based on the protocol of the first layer of the protocol stack. The secondary decryption unit 3f can perform decryption in the first layer, i.e., secondary decryption, on data input to the first layer processing unit 3e on the receiving end. Further, the primary encryption unit 3i can perform encryption in the first layer, i.e., primary encryption, on data input to the first layer processing unit 3e on the transmitting end.

That is, in the base station 3, data may be repeatedly encrypted in both of the first layer and the second layer, similarly to the terminal 2.

The core network interface unit 3g transmits the data input from the first layer processing unit 3e, and the encryption level notification signal input from the reception unit 3b to the MME 4. Further, the core network interface unit 3g outputs the encryption level information received from the MME 4 to the encryption level setting unit 3h and the transmission unit 31, and outputs data received from the MME 4 to the first layer processing unit 3e.

The encryption level setting unit 3h sets the encryption level finally determined by the MME 4 to the secondary encryption unit 3j, based on the input encryption level information. Further, the encryption level setting unit 3h sets the decryption level equal to the encryption level set to the secondary encryption unit 3j to the primary decryption unit 3d. The encryption level setting unit 3h activates an encryption/decryption module corresponding to the set level, but stops for example supply of an operation clock to an encryption/decryption module not corresponding to the set level to reduce power consumption.

The control signal generation unit 3k generates various control signals to the terminal 2, and outputs the various control signals to the transmission unit 31.

The transmission unit 31 transmits the control signals input from the control signal generation unit 3k, the encryption level information input from the core network interface unit 3g, and data input from the second layer processing unit 3c to the terminal 2 through the antenna 3a.

### <Exemplary configuration of MME>

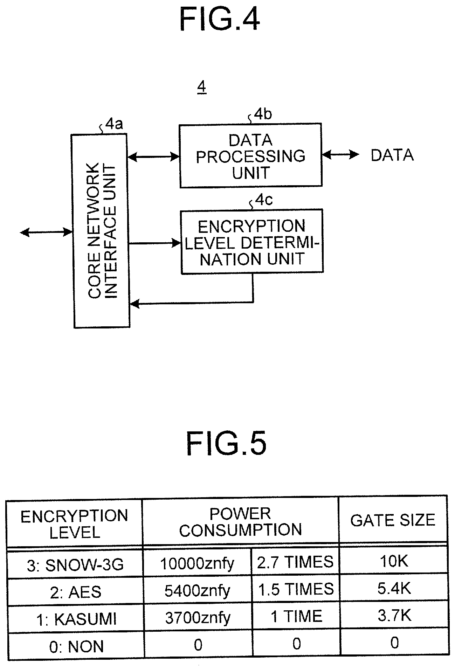

FIG. 4 is a functional block diagram illustrating a main configuration of the MME according to the first embodiment. In FIG. 4, the MME 4 includes a core network interface unit 4a, a data processing unit 4b, and an encryption level determination unit 4c.

The core network interface unit 3g is connected to the core network interface unit 4a of the base station 3, outputs data received from the base station 3 to the data processing unit 4b, and transmits data input from the data processing unit 4b to the base station 3. Further, the core network interface unit 4a outputs the encryption level notification signal received from the base station 3 to the encryption level determination unit 4c, and transmits the encryption level information input from the encryption level determination unit 4c to the base station 3.

The data processing unit 4b performs, on the core network side, various processing on the input data.

The encryption level determination unit 4c finally determines the encryption levels of the terminal 2 and the base station 3, based on the encryption level notified of using the encryption level notification signal and outputs encryption level information to the core network interface unit 4a.

### <Specific example of encryption level>

FIG. 5 is a table for description of the encryption level according to the first embodiment. In FIG. 5, as an example, the terminal 2 is assumed to have a capability of using three encryption schemes, i.e., SNOW-3G, AES, and KASUMI.

When encryption modules of the SNOW-3G, AES, and KASUMI are configured as hardware, as an example, the SNOW-3G has 10K gates, the AES has 5.4K gates, and the KASUMI has 3.7K gates. When power consumption [µW] is assumed based on these gate sizes, the SNOW-3G is 10,000 znfy, the AES is 5,400 znfy, and the KASUMI is 3,700 znfy. Wherein, "z" is a basic call count per gate, "n" is power consumption per basic call, "f" is a maximum frequency [MHz], and "y" is an operation rate [W]. Therefore, power consumption of the SNOW-3G is 2.7 times greater than that of the AES, and power consumption of the AES is 1.5 times greater than that of the KASUMI. As described above, the confidentiality of the encryption scheme is decreased in order of SNOW-3G, AES, and KASUMI. That is, as the confidentiality of the encryption scheme is increased, the power consumption is increased due to increased calculation amount.

Therefore, in the present embodiment, an encryption level is applied to each encryption scheme, according to the strength of confidentiality, i.e., the amount of power consumed. That is, level 1 is applied to the KASUMI, level 2 is applied to the AES, and level 3 is applied to the SNOW-3G, in order from lower confidentiality. Further, encryption is not performed in the secondary encryption unit 2d, that is, level 0 is applied to "no encryption". In other words, in the present embodiment, as the encryption level is higher, the confidentiality is increased, and power consumption is increased.

In the present embodiment, the threshold as described below is set to each encryption level.

### <Specific example of threshold table>

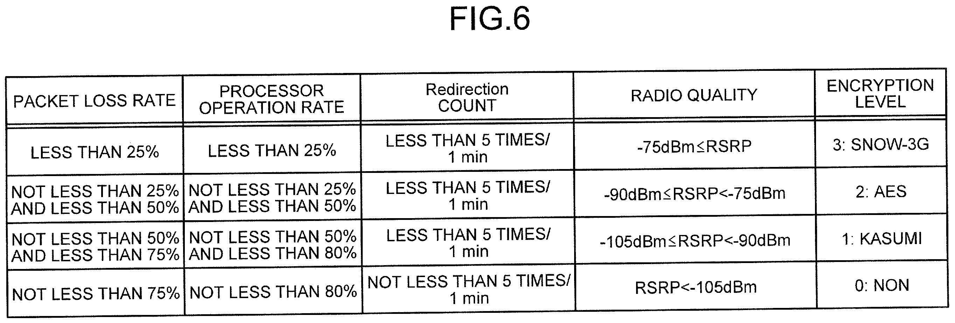

FIG. 6 is a diagram illustrating an exemplary threshold table according to the first embodiment. In FIG. 6, a "packet loss rate", a "processor operation rate", a "Redirection count", and a "radio quality" are parameters representing the "terminal condition". These parameters are input to the encryption level determination unit 2e, and the encryption level determination unit 2e obtains the thresholds of the parameters from the threshold table. Each parameter will be described below.

### <Radio quality>

As an example, the radio quality includes reference signal received power (RSRP) of the terminal 2. Normally, higher RSRP represents good radio quality between the terminal 2 and the base station 3, and lower RSRP represents poor radio quality therebetween. Therefore, in the present embodiment, as the RSRP is reduced, the encryption level is lowered. As the radio quality between the terminal 2 and the base station 3 gets worse, a probability of occurrence of "handover" (hereinafter, sometimes referred to as "HO") is increased which represents switching of a connection destination of the terminal 2 to another base station other than the base station 3, so that electric power demand for HO processing is increased. Further, for example, in a time division duplex (TDD) system, when the terminal 2 has low RSRP, an upstream channel is also assumed to have poor radio quality, similarly to a downstream channel, and transmission power control may be performed to increase the transmission power of the terminal 2 having lower RSRP. Therefore, in the present embodiment, as the RSRP is reduced, i.e., as the radio quality gets worse, the encryption level is lowered. For example, as illustrated in FIG. 6, the encryption level determination unit 2e determines the encryption level as level 3 (SNOW-3G) when RSRP is not less than -75 dBm, and determines the encryption level as level 2 (AES) when the RSRP is not less than -90 dBm and less than-75 dBm. Further, the encryption level determination unit 2e determines the encryption level as level 1(KASUMI) when RSRP is not less than -105 dBm and less than -90 dBm, and determines the encryption level as level 0 (no encryption) when RSRP is less than -105 dBm. Therefore, as the radio quality gets worse, power consumption for encryption in the secondary encryption unit 2d can be further reduced, and an amount of power equal to the reduced amount of power can be assigned to HO processing or increased transmission power.

### <Redirection count>

A Redirection message represents a message sent to the terminal 2 by the base station 3, when the base station 3 forcibly conducts handover (HO) of the terminal 2 from the base station 3 to another base station regardless of a request from the terminal 2. Transmission of the Redirection message by the base station 3 is performed, for example, when the number of terminals accommodated in a local station exceeds an upper limit, or when communication restriction is put on a local communication area. That is, the Redirection message is often transmitted regardless of the radio quality between the terminal 2 and the base station 3. The Redirection message is different from an HO command transmitted based on the radio quality, in this point. When receiving the Redirection message from the base station 3, the terminal 2 is forcibly handed over to another base station other than the base station 3. Therefore, as the Redirection count is increased, an HO count is also increased, and electric power demand for HO processing is increased. Therefore, in the present embodiment, as the Redirection count is increased, the encryption level is lowered. For example, as illustrated in FIG. 6, when the Redirection count is less than five per minute, the encryption level determination unit 2e determines the encryption level as level 3 (SNOW-3G), level 2 (AES), or level 1 (KASUMI). At this time, any one of levels 1 to 3 is determined based on another parameter other than the Redirection count. Further, when the Redirection count is not less than five per minute, the encryption level determination unit 2e determines the encryption level as level 0 (no encryption). Therefore, as the Redirection count is increased, the power consumption for encryption in the secondary encryption unit 2d can be further reduced, and an amount of power equal to the reduced amount of power can be assigned to HO processing.

### <Processor operation rate>

In each processor included in the terminal 2, as task management, a processor operation rate is measured. As the processor operation rate is increased, power consumption of the terminal 2 is expected to be larger. Therefore, in the present embodiment, as the processor operation rate is increased, the encryption level is lowered. For example, as illustrated in FIG. 6, the encryption level determination unit 2e determines the encryption level as level 3 (SNOW-3G) when the processor operation rate is less than 25%, and determines the encryption level as level 2 (AES) when the processor operation rate is not less than 25% and less than 50%. Further, the encryption level determination unit 2e determines the encryption level as level 1 (KASUMI) when the processor operation rate is not less than 50% and less than 80%, and determines the encryption level as level 0 (no encryption) when the processor operation rate is not less than 80%. Therefore, as the processor operation rate is increased, power consumption for encryption in the secondary encryption unit 2d can be further reduced.

### <packet loss rate>

Discarding a downlink packet received by the terminal 2 is performed, for example, when a cyclic redundancy check (CRC) result of the downlink packet is NG due to deterioration in radio quality. Discarding an uplink packet transmitted by the terminal 2 is performed, for example, when the CRC result of the uplink packet is NG in the terminal 2 due to asynchronous thereof in the terminal 2. As described above, when the packet is discarded, retransmission of the packet is performed in the terminal 2, and electric power demand for retransmission thereof is increased. For example, when the downlink packet is discarded, negative acknowledgement (NACK) is transmitted to the base station 3, and when the uplink packet is discarded, the uplink packet is retransmitted to the base station 3. Further, for example, in TDD scheme, when the CRC result of the downlink packet is NG, the upstream channel is also assumed to have poor radio quality, similarly to the downstream channel, and transmission power control may be performed to increase the transmission power of the terminal 2 when the CRC results in NG. Therefore, in the present embodiment, as the packet loss rate is increased, the encryption level is lowered. For example, as illustrated in FIG. 6, the encryption level determination unit 2e determines the encryption level as level 3 (SNOW-3G) when the packet loss rate is less than 25%, and determines the encryption level as level 2 (AES) when the packet loss rate is not less than 25% and less than 50%. Further, the encryption level determination unit 2e determines the encryption level as level 1 (KASUMI) when the packet loss rate is not less than 50% and less than 75%, and determines the encryption level as level 0 (no encryption) when the packet loss rate is not less than 75%. Therefore, as the packet loss rate is increased, power consumption for encryption in the secondary encryption unit 2d can be further reduced, and an amount of power equal to the reduced amount of power can be assigned to retransmission or increased transmission power.

### <processing operation of terminal>

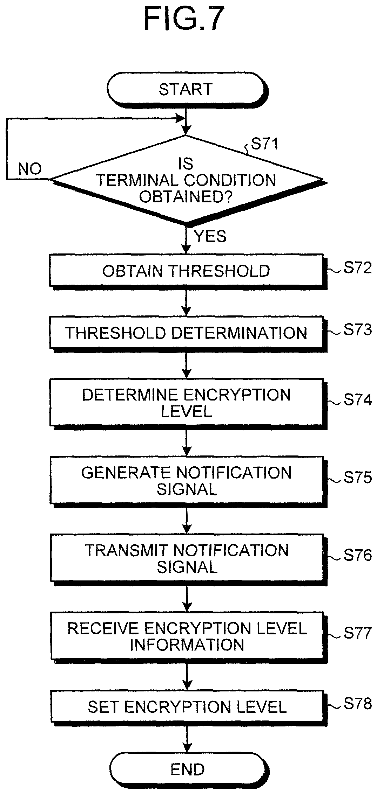

FIG. 7 is an explanatory flowchart illustrating processing operation of the terminal according to the first embodiment.

The encryption level determination unit 2e stands by until the parameters, i.e., the terminal condition is obtained (step S71: No).

When obtaining the terminal condition (step S71: Yes), the encryption level determination unit 2e obtains a threshold of each parameter representing the terminal condition from the threshold table (FIG. 6) (step S72).

As described above, the encryption level determination unit 2e performs threshold determination on each parameter to determine the encryption level, and outputs the determined encryption level to the notification signal generation unit 2f (steps S73, S74).

The notification signal generation unit 2f generates the encryption level notification signal (step S75), and the transmission unit 2g transmits the encryption level notification signal (step S76).

The reception unit 2i receives the encryption level information finally determined by the MME 4, representing the encryption level, from the base station 3 (step S77).

The encryption level determination unit 2e sets the encryption level of the secondary encryption unit 2d, and the decryption level of the primary decryption unit 2j, based on the encryption level information received in step S77 (step S78).

As described above, in the terminal 2 according to the present embodiment, the primary encryption unit 2b performs encryption in the first layer of the protocol stack, and the secondary encryption unit 2d performs encryption in the second layer lower than the first layer. The encryption level determination unit 2e determines the encryption level of the encryption in the second layer according to the condition of the terminal 2. Since the encryption is performed in the first layer, even if the encryption level in the second layer is lowered relative to a maximum encryption level of the terminal 2, the confidentiality can be maintained. Therefore, when encryption can be repeatedly performed in both of the first layer and the second layer, the encryption level of the encryption in the second layer can be lowered relative to the maximum encryption level of the terminal 2, and power is saved in encryption.

### [Second embodiment]

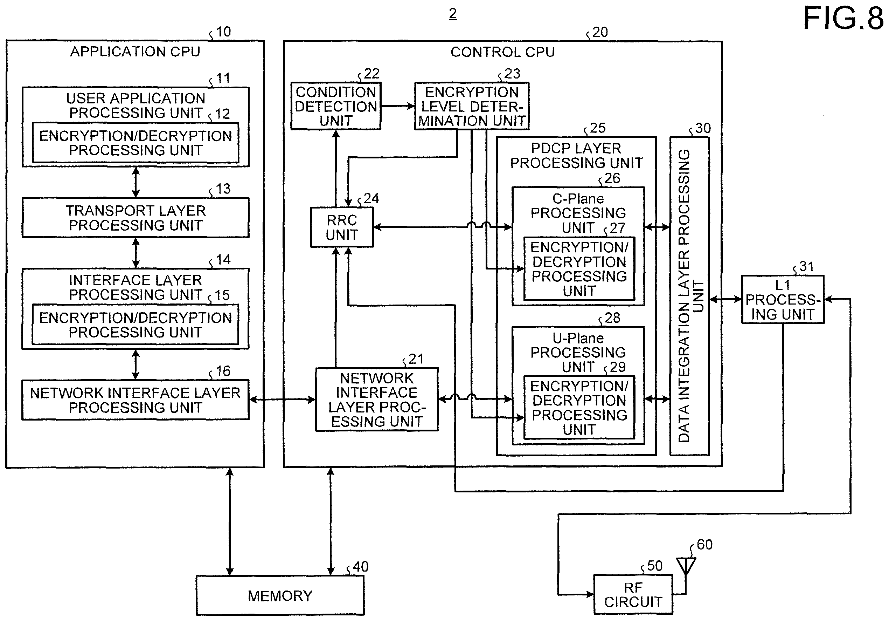

FIG. 8 is a diagram illustrating an exemplary configuration of the terminal according to a second embodiment. In FIG. 8, the terminal 2 includes an application CPU 10, a control CPU 20, a memory 40, a layer 1 (L1) processing unit 31, an RF circuit 50, and an antenna 60.

The application CPU 10 includes a user application processing unit 11, a transport layer processing unit 13, an interface layer processing unit 14, and a network interface layer processing unit 16. Further, the user application processing unit 11 includes an encryption/decryption processing unit 12, and the interface layer processing unit 14 includes an encryption/decryption processing unit 15.

The control CPU 20 includes a network interface layer processing unit 21, a condition detection unit 22, an encryption level determination unit 23, a radio resource control (RRC) unit 24, a PDCP layer processing unit 25, and a data integration layer processing unit 30. Further, the PDCP layer processing unit 25 includes a control plane (C-plane) processing unit 26 and a user plane (U-plane) processing unit 28, the C-plane processing unit 26 includes an encryption/decryption processing unit 27, and the U-plane processing unit 28 includes an encryption/decryption processing unit 29.

Description will be made below focusing on processing upon data transmission. It is noted that, upon receiving data, each encryption/decryption processing unit can perform decryption of received encrypted data, at a decryption level set by the encryption level determination unit 23.

The user application processing unit 11 processes user data, i.e., U-plane data, such as VoIP data or streaming data generated by each user application activated in the terminal 2. The encryption/decryption processing unit 12 can perform encryption of the U-plane data generated by each user application.

The transport layer processing unit 13 performs processing on the U-plane data according to each of a transmission control protocol (TCP), and a user datagram protocol (UDP).

The interface layer processing unit 14 performs processing on the U-plane data according to an Internet protocol (IP). The encryption/decryption processing unit 15 can perform encryption in an interface layer.

It is noted that FIG. 8 illustrates exemplary implementation places of the encryption/decryption processing units 12 and 15, and the encryption/decryption processing units 12 and 15 may be implemented to another processing unit such as the transport layer processing unit 13, as long as the encryption/decryption processing units 12 and 15 are implemented in different layers.

The network interface layer processing units 16 and 21 perform interface processing between the application CPU 10 and the control CPU 20 according to a point-to-point protocol (PPP).

The condition detection unit 22 detects various conditions of the terminal 2, i.e., the terminal condition, and outputs the terminal condition to the encryption level determination unit 23.

The encryption level determination unit 23 corresponds to the encryption level determination unit 2e of FIG. 2, and determines the encryption levels of the encryption/decryption processing units 27 and 29 according to the terminal condition.

The RRC unit 24 corresponds to the notification signal generation unit 2f of FIG. 2, and generates and analyzes data for controlling a wireless channel, i.e., C-plane data. The encryption level notification signal serves as one of the C-plane data. The RRC unit 24 generates an encryption level notification signal for notifying of the encryption level determined by the encryption level determination unit 23, and outputs the encryption level notification signal to the C-plane processing unit 26. That is, the RRC unit 24 generates an encryption level notification signal so that the encryption level determined by the encryption level determination unit 23 is finally determined by the MME 4 highly possibly, and outputs the encryption level notification signal to the C-plane processing unit 26. For example, the encryption level notification signal is output to the C-plane processing unit 26. The encryption level notification signal represents that the terminal 2 supports only an encryption scheme relating to the determined encryption level. The encryption level is one type of terminal capability of the terminal 2, so that the RRC unit 24 may report the encryption level as the terminal capability information. Further, the RRC unit 24 performs processing defined in 3GPP TS36.331. For example, the RRC unit 24 performs broadcast, paging, RRC connection management, resource block (RB) control, mobility management, measurement result report, or the like.

The PDCP layer processing unit 25 performs processing defined in 3GPP TS36.323, such as header compression, or encryption/decryption processing.

The C-plane processing unit 26 converts the C-plane data to a wireless communication format. The encryption/decryption processing unit 27 can perform encryption of the C-plane data.

The U-plane processing unit 28 converts the U-plane data to a wireless communication format. The encryption/decryption processing unit 29 can perform encryption of the U-plane data.

The data integration layer processing unit 30 integrates the C-plane data and the U-plane data with an assigned radio frame. Further, the data integration layer processing unit 30 performs medium access control (MAC) processing and radio link control (RLC) processing. That is, the data integration layer processing unit 30 performs processing of the layer 2 defined in 3GPP TS36.321, such as error detection, or mapping of various channels, as the MAC processing. Further, the data integration layer processing unit 30 performs processing of the layer 2 defined in 3GPP TS36.322, such as establishment of a communication link between the terminal 2 and the base station 3, or automatic repeat-request (ARQ) processing, as the RLC processing.

The L1 processing unit 31 performs processing defined in 3GPP TS36.302, TS36.101, TS36.211, TS36.212, TS36.213, and TS36.214. For example, the L1 processing unit 31 performs encoding and modulation of the C-plane data and the U-plane data being physical channel data, and outputs a baseband signal to the RF circuit 50. The L1 processing unit 31 for example includes a digital signal processor (DSP).

The RF circuit 50 corresponds to the transmission unit 2g of FIG. 2, converts the baseband signal to a radio signal, and transmits the radio signal through the antenna 60.

The antenna 60 corresponds to the antenna 2h of FIG. 2.

The memory 40 includes, for example, RAM such as SDRAM, ROM, and flash memory.

The U-plane data is input to the data integration layer processing unit 30, from the user application processing unit 11 through the transport layer processing unit 13, the interface layer processing unit 14, the network interface layer processing units 16 and 21, and the U-plane processing unit 28. Whereas, the C-plane data is input to the data integration layer processing unit 30 from the RRC unit 24 through the C-plane processing unit 26.

Here, the user application processing unit 11 or the interface layer processing unit 14 serves as a processing unit for encryption in the first layer. That is, the user application processing unit 11 or the interface layer processing unit 14 corresponds to the first layer processing unit 2a of FIG. 2. Therefore, the encryption/decryption processing unit 12 or the encryption/decryption processing unit 15 corresponds to the primary encryption unit 2b and the secondary decryption unit 2k of FIG. 2. That is, the primary encryption unit 2b of FIG. 2 can perform encryption of only the U-plane data of the U-plane data and the C-plane data, and the secondary decryption unit 2k of FIG. 2 can perform decryption of only the U-plane data of the U-plane data and the C-plane data. Whereas, the PDCP layer processing unit 25 serves as a processing unit for encryption in the second layer. That is, the PDCP layer processing unit 25 corresponds to the second layer processing unit 2c of FIG. 2. Therefore, the encryption/decryption processing units 27 and 29 correspond, as one encryption/decryption processing unit, to the secondary encryption unit 2d and the primary decryption unit 2j of FIG. 2. That is, the secondary encryption unit 2d of FIG. 2 can perform encryption of both of the C-plane data and the U-plane data, and the primary decryption unit 2j of FIG. 2 can perform encryption of both of the C-plane data and the U-plane data. In other words, the U-plane data is repeatedly encrypted in the first layer and the second layer, but the C-plane data is encrypted only in the second layer. Therefore, according to the present embodiment, the degree of confidentiality can differ between the U-plane data and the C-plane data. For example, the U-plane data is subjected to double encryption in the first layer and the second layer to enhance confidentiality of the U-plane data relative to the confidentiality of the C-plane data.

Further, the encryption level determination unit 23 may independently determine the encryption level in the encryption/decryption processing unit 27, i.e., the encryption level of the C-plane data, and the encryption level in the encryption/decryption processing unit 29, i.e., the encryption level of the U-plane data. Therefore, in the PDCP layer, two encryption levels, i.e., the encryption level of the C-plane data and the encryption level of the U-plane data are made different.

As an example, the encryption level determination unit 23 may determine the encryption level of the encryption/decryption processing unit 29 based on each parameter, according to the condition of the terminal 2, or may determine the encryption level of the encryption/decryption processing unit 27 according to capability of the terminal 2. For example, the encryption level determination unit 23 determines the encryption level of the encryption/decryption processing unit 27, i.e., the encryption level of the C-plane data, as a maximum allowable level of the capability of the terminal 2. That is, when there are four encryption levels as illustrated in FIG. 6, the encryption level of the C-plane data is determined as level 3 (SNOW-3G). Therefore, while the encryption level of the C-plane data encrypted only in the second layer is fixedly maintained at the maximum level, the encryption level of the U-plane data in the second layer can be reduced relative to the maximum level.

In the following third to eighth embodiments, description will be made of an exemplary sequence of processing operation of the communication system 1, including processing operation of the terminal 2 illustrated in FIG. 8. It is noted that, in FIG. 8, the C-plane processing unit 26 and the data integration layer processing unit 30 are positioned between the RRC unit 24 and the L1 processing unit 31. However, in the third to eighth embodiments, description of the C-plane processing unit 26 and the data integration layer processing unit 30 will be omitted for clear description. The C-plane data from the RRC unit 24 is input to the L1 processing unit 31 through the C-plane processing unit 26 and the data integration layer processing unit 30, also in the third to eighth embodiments. Similarly, in FIG. 8, the RF circuit 50 and the antenna 60 are provided following the L1 processing unit 31. However, in the third to eighth embodiments, description of the RF circuit 50 and the antenna 60 will be omitted for clear description. Data from the L1 processing unit 31 is transmitted to the base station 3 through the RF circuit 50 and the antenna 60, also in the third to eighth embodiments.

### [Third embodiment]

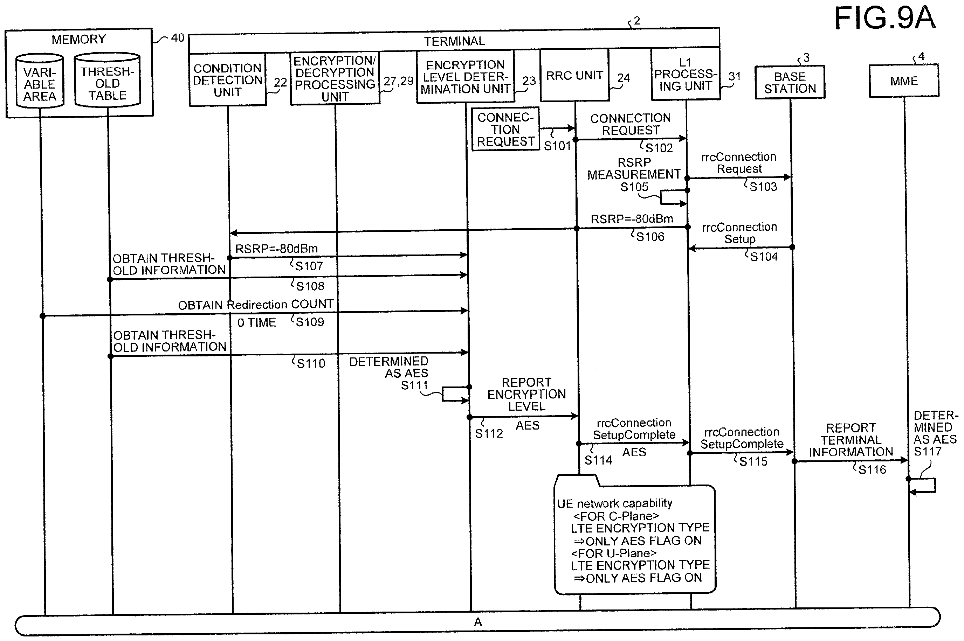

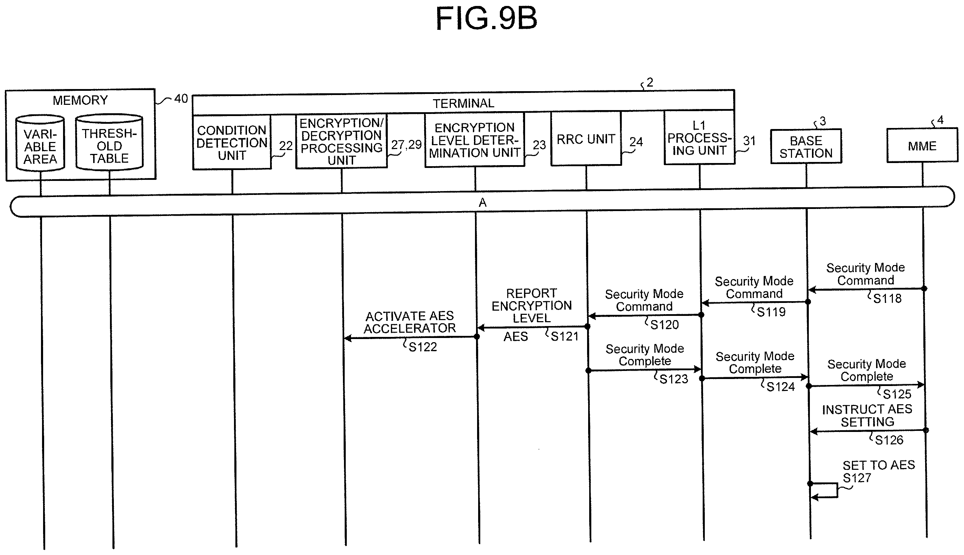

FIGS. 9A and 9B are sequence diagrams illustrating exemplary processing operations of the communication system according to a third embodiment. FIGS. 9A and 9B illustrate sequences upon starting communication.

When the terminal 2 is turned on, or an event, such as activation of a new user application, is generated in the terminal 2, the user application processing unit 11 generates a connection request. The connection request is input to the RRC unit 24 through the transport layer processing unit 13, the interface layer processing unit 14, and the network interface layer processing units 16 and 21.

When the connection request is input to the RRC unit 24 (step S101), the RRC unit 24 outputs the connection request to the L1 processing unit 31 through the PDCP layer processing unit 25 and the data integration layer processing unit 30 (step S102), and the L1 processing unit 31 transmits the connection request as an rrcConnectionRequest message to the base station 3 through the RF circuit 50 and the antenna 60 (step S103). The base station 3 transmits the rrcConnectionSetup message to the terminal 2 (step S104).

When receiving the connection request, the L1 processing unit 31 measures RSRP (step S105), and outputs a measurement result, -80 dBm, to the RRC unit 24, through the data integration layer processing unit 30 and the PDCP layer processing unit 25, and the RRC unit 24 outputs the measurement result to the condition detection unit 22 (step S106).

The condition detection unit 22 detects RSRP = - 80 dBm as the condition of the terminal 2, and outputs a detected result to the encryption level determination unit 23 (step S107).

The encryption level determination unit 23 to which the RSRP measurement result is input obtains RSRP threshold information from the threshold table (FIG. 6) stored in the memory 40 (step S108). Further, the encryption level determination unit 23 obtains the Redirection count stored in a variable area of the memory 40 (step S109), and obtains threshold information of the Redirection count from the threshold table (step S110). When communication is started, the Redirection count is 0.

Since Redirection count = 0 and RSRP = -80 dBm, the encryption level determination unit 23 determines the encryption level as level 2 (AES) (step S111). The encryption level determination unit 23 reports the determined encryption level to the RRC unit 24 (step S112).

The RRC unit 24 receiving the report of the encryption level generates an rrcConnectionSetupComplete message representing that an encryption scheme which the terminal 2 (UE) is capable of processing is only AES of level 2, for both of the C-plane and the U-plane, and outputs the rrcConnectionSetupComplete message to the L1 processing unit 31 through the PDCP layer processing unit 25 and the data integration layer processing unit 30 (step S114). The L1 processing unit 31 transmits the rrcConnectionSetupComplete message to the base station 3 through the RF circuit 50 and the antenna 60 (step S115).

Here, the conventional terminal reports the encryption scheme capable of being processed by the terminal itself, selected from the three encryption schemes, i.e., SNOW-3G, AES, and KASUMI, to the MME through the base station. Therefore, the conventional terminal sometimes specifies a plurality of encryption schemes in an UE network capability list included in an rrcConnectionSetupComplete message. Whereas, in an UE network capability list included in the rrcConnectionSetupComplete message generated by the RRC unit 24 of the terminal 2, only one encryption scheme determined from among the three encryption schemes by the encryption level determination unit 23 is specified. For example, in an example illustrated in FIGS. 9A and 9B, only an AES flag is turned "on", selected from three SNOW-3G, AES, and KASUMI flags, for both of the C-plane and the U-plane. The UE network capability list corresponds to the above-mentioned "encryption level notification signal".

The base station 3 receiving the rrcConnectionSetupComplete message transfers and reports the UE network capability list as terminal information to the MME 4 (step S116).

Since only the AES flag is turned "on" in the UE network capability list, that is, the encryption level reported from the terminal 2 is level 2 (AES), the MME 4 finally determines the encryption level as level 2 (AES) (step S117).

The MME 4 transmits a security mode command representing that the encryption level is finally determined as level 2 (AES), to the base station 3 (step S118). The security mode command corresponds to the above-mentioned "encryption level information".

The base station 3 transfers the security mode command received from the MME 4 to the terminal 2 (step S119).

In the terminal 2, the L1 processing unit 31 outputs the security mode command received through the antenna 60 and the RF circuit 50, to the RRC unit 24 through the data integration layer processing unit 30 and the PDCP layer processing unit 25 (step S120).

The RRC unit 24 reports to the encryption level determination unit 23 the contents of the security mode command, i.e., the encryption level finally determined as level 2 (AES) by the MME 4 (step S121).

The encryption level determination unit 23 sets the encryption levels of the encryption/decryption processing units 27 and 29 to level 2 (AES), according to the report in step S121, and activates AES accelerators of the encryption/decryption processing units 27 and 29 (step S122).

Whereas, the RRC unit 24 to which the security mode command is input instep S120 outputs a Security Mode Complete message to the L1 processing unit 31 through the PDCP layer processing unit 25 and the data integration layer processing unit 30 (step S123), and the L1 processing unit 31 transmits the Security Mode Complete message to the base station 3 through the RF circuit 50 and the antenna 60 (step S124).

The base station 3 receiving the Security Mode Complete message transfers the Security Mode Complete messageto the MME 4 (step S125). The MME 4 transmits an AES setting instruction to the base station 3 (step S126). The setting instruction corresponds to the above-mentioned "encryption level information".

Then the base station 3 sets the encryption level of the base station 3 to level 2 (AES) according to the setting instruction from the MME 4 (step S127).

### [Fourth embodiment]

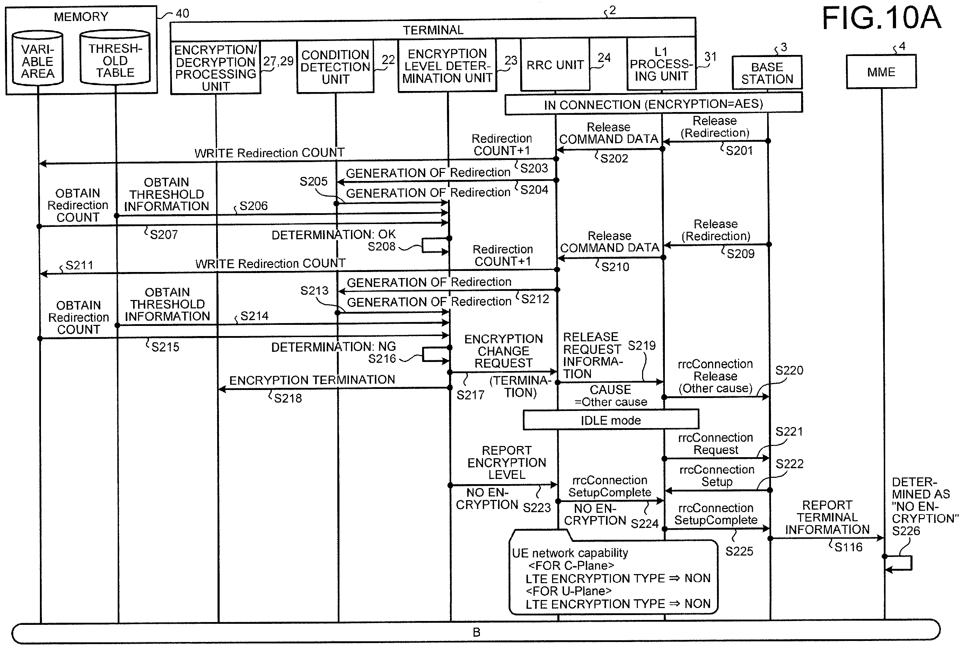

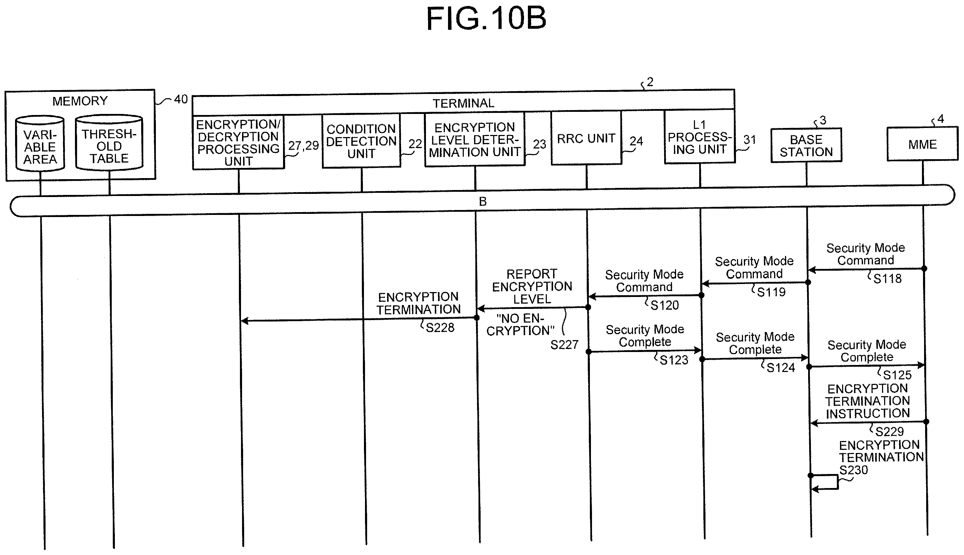

FIGS. 10A and 10B are sequence diagrams illustrating exemplary processing operations of the communication system according to a fourth embodiment. FIGS. 10A and 10B illustrate sequences following the sequences of FIGS. 9A and 9B.

While the terminal 2 and the base station 3 are in connection with each other using AES, the base station 3 transmits a Release message including the Redirection message to the terminal 2 (step S201).

The L1 processing unit 31 outputs Release command data obtained by analyzing the Release message, i.e., Redirection message, to the RRC unit 24 (step S202).

The RRC unit 24 to which the Redirection message is input adds "1" to the Redirection count per minute, and writes the Redirection count to which "1" has been added to the variable area of the memory 40 (step S203), and reports generation of Redirection to the condition detection unit 22 (step S204).

The condition detection unit 22 detects generation of the Redirection as the condition of the terminal 2, and reports the generation of the Redirection to the encryption level determination unit 23 (step S205).

The encryption level determination unit 23 to which generation of the Redirection is reported obtains threshold information of the Redirection count from the threshold table (FIG. 6) stored in the memory 40 (step S206). Further, the encryption level determination unit 23 obtains the Redirection count per minute stored in the variable area of the memory 40 (step S207). Here, the Redirection count is less than five per minute. Therefore, the encryption level determination unit 23 determines that the Redirection count is "OK", and maintains level 2 (AES) determined in FIGS. 9A and 9B according to a parameter other than the Redirection count, RSRP here (step S208).

Processing of steps S209 to S215 is similar to processing of steps S201 to S207. However, in step S211, it is assumed that the Redirection count is not less than five per minute. Therefore, the encryption level determination unit 23 determines that the Redirection count is "NG", and determines the encryption level as level 0 (no encryption) (step S216). The encryption level determination unit 23 reports an encryption change request indicating "encryption termination" to the RRC unit 24 (step S217).

The RRC unit 24 receiving the encryption change request outputs release request information whose cause is "Other cause" to the L1 processing unit 31 through the PDCP layer processing unit 25 and the data integration layer processing unit 30 (step S219), and the L1 processing unit 31 transmits an rrcConnectionRelease (Other cause) message to the base station 3 through the RF circuit 50 and the antenna 60 (step S220). Therefore, the RRC unit 24 and the L1 processing unit 31 are put into an idle mode.

The L1 processing unit 31 returned from the idle mode transmits the rrcConnectionRequest message to the base station 3 through the RF circuit 50 and the antenna 60 (step S221). The base station 3 transmits the rrcConnectionSetup message to the terminal 2 (step S222).

Further, in the terminal 2, the encryption level determination unit 23 reports level 0 (no encryption) being the encryption level determined in step S216 to the RRC unit 24 (step S223).

The RRC unit 24 receiving the report of the encryption level generates an rrcConnectionSetupComplete message representing that the encryption level is level 0 (no encryption), for both of the C-plane and the U-plane, and outputs the rrcConnectionSetupComplete message to the L1 processing unit 31 through the PDCP layer processing unit 25 and the data integration layer processing unit 30 (step S224). The L1 processing unit 31 transmits the rrcConnectionSetupComplete message to the base station 3 through the RF circuit 50 and the antenna 60, in response to the rrcConnectionSetup message received in step S222 (step S225). Here, in the UE network capability list included in the rrcConnectionSetupComplete message, all of the three SNOW-3G, AES, and KASUMI flags are turned "off" to indicate that the encryption level is level 0 (no encryption), for both of the C-plane and the U-plane.

The base station 3 receiving the rrcConnectionSetupComplete message transfers and reports the UE network capability list as terminal information to the MME 4 (step S116).

Since all of the flags are turned "off" in the UE network capability list, that is, the encryption level reported from the terminal 2 is level 0 (no encryption), the MME 4 finally determines the encryption level as level 0 (no encryption) (step S226).

In FIGS. 10A and 10B, processing of steps S118 to S120 is similar to the processing of FIGS. 9A and 9B.

The RRC unit 24 reports to the encryption level determination unit 23 the contents of the security mode command, i.e., the encryption level finally determined as level 0 (no encryption) by the MME 4 (step S227).

The encryption level determination unit 23 terminates encryption in the encryption/decryption processing units 27 and 29, according to report in step S227 (step S228).

In FIGS. 10A and 10B, processing of steps S123 to S125 is similar to the processing of FIGS. 9A and 9B.

The MME 4 to which the Security Mode Complete message is transferred from the base station 3 transmits an encryption termination instruction to the base station 3 (step S229). The termination instruction corresponds to the above-mentioned "encryption level information".

The, the base station 3 terminates the encryption in the base station 3 according to the termination instruction from the MME 4 (step S230).

### [Fifth embodiment]

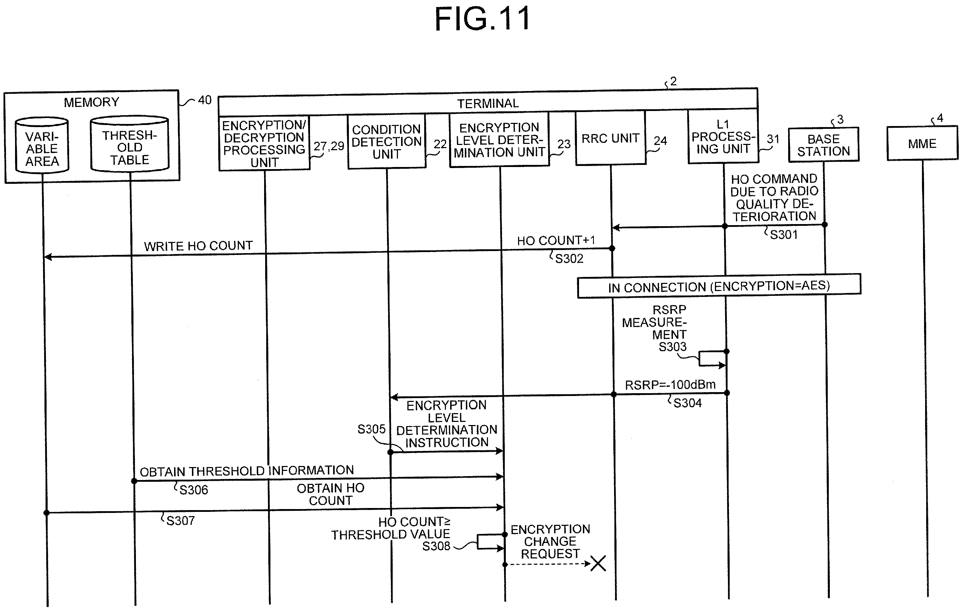

FIG. 11 is a sequence diagram illustrating an exemplary processing operation of a communication system according to a fifth embodiment. FIG. 11 illustrates a sequence following the sequences of FIGS. 9A and 9B.

When the radio quality between the terminal 2 and the base station 3 is deteriorated below a threshold, the base station 3 transmits the HO command to the terminal 2, and the L1 processing unit 31 receiving the HO command through the antenna 60 and the RF circuit 50, outputs the HO command to the RRC unit 24 through the data integration layer processing unit 30 and the PDCP layer processing unit 25 (step S301).

The RRC unit 24 to which the HO command is input adds "1" to the HO count per a certain time period, and writes the HO count to which "1" has been added to the variable area of the memory 40 (step S302).

While the terminal 2 and the base station 3 are in connection with each other using AES, the L1 processing unit 31 measures RSRP (step S303), and outputs a measurement result, -100 dBm, to the RRC unit 24, through the data integration layer processing unit 30 and the PDCP layer processing unit 25, and the RRC unit 24 outputs the measurement result to the condition detection unit 22 (step S304).

The condition detection unit 22 detects RSRP = - 100 dBm as the condition of the terminal 2, and outputs an encryption level determination instruction to the encryption level determination unit 23 due to change of the RSRP from -80 dBm detected in step S106 of FIG. 9A (step S305).

The encryption level determination unit 23 to which the encryption level determination instruction is input obtains threshold information of the HO count from the threshold table stored in the memory 40 (step S306). Further, the encryption level determination unit 23 obtains the HO count per a certain time period stored in the variable area of the memory 40 (step S307).

The encryption level determination unit 23 compares the HO count per a certain time period and a threshold, and when the HO count is not less than the threshold, the encryption level determination unit 23 does not change the encryption level, and does not output the encryption change request, even if the RSRP is changed (step S308).

The terminal 2 receiving the HO command switches a connection destination to another base station other than the base station 3 and having a preferable radio quality. As described above, HO caused by the HO command is performed based on the radio quality. Further, when the HO count is not less than the threshold, it is expected that the terminal 2 is positioned around a cell boundary between a plurality of base stations, and the terminal 2 is in a condition to have variable RSRP. Therefore, the encryption level may be frequently changed. The frequent change of the encryption level frequently repeats processing of step S219 and subsequent steps of FIG. 10A, and results in the increase of power consumption of the terminal 2.
Therefore, when the HO count is larger than the threshold, the encryption level is not changed to prevent the frequent change of the encryption level, and power consumption is reduced.

### [Sixth embodiment]

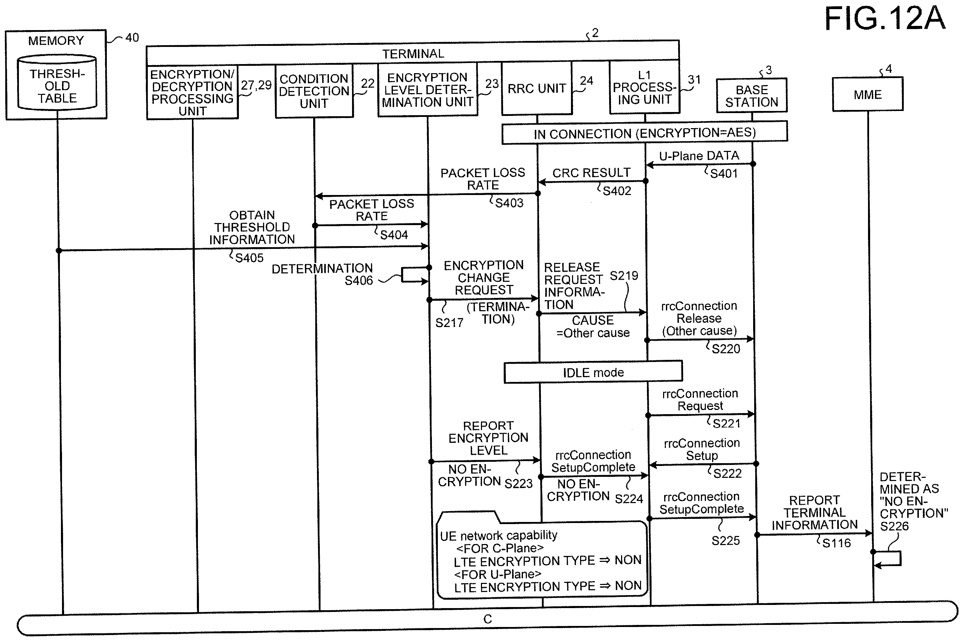

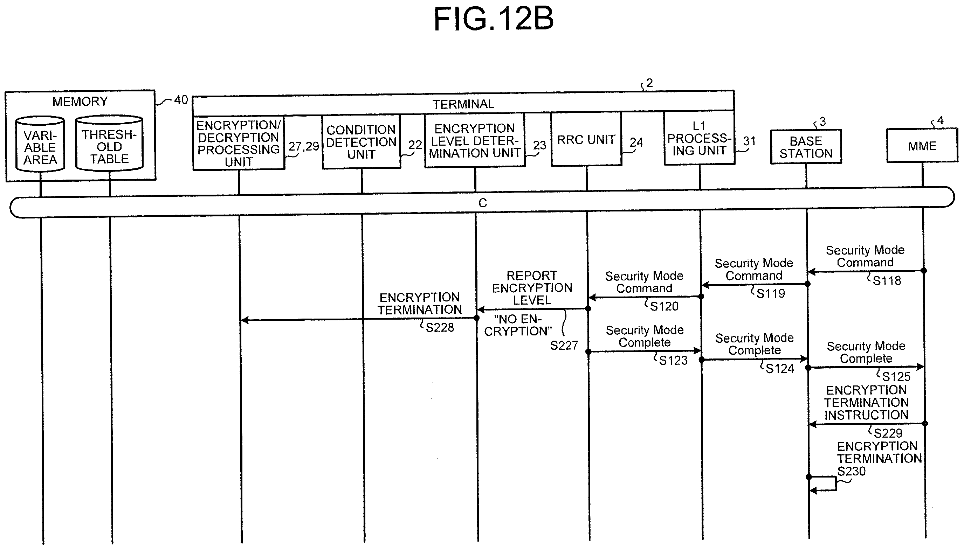

FIGS. 12A and 12B are sequence diagrams illustrating exemplary processing operation of the communication system according to a sixth embodiment. FIGS. 12A and 12B illustrate sequences following the sequences of FIGS. 9A and 9B.

While the terminal 2 and the base station 3 are connected to each other using AES, the L1 processing unit 31 receives the U-plane data from the base station 3 through the antenna 60 and the RF circuit 50 (step S401). The L1 processing unit 31 performs CRC processing on the U-plane data, and outputs a CRC result to the RRC unit 24 through the data integration layer processing unit 30 and the PDCP layer processing unit 25 (step S402).

The RRC unit 24 to which the CRC result obtains the packet loss rate from the CRC result, and outputs the packet loss rate to the condition detection unit 22 (step S403). The packet loss rate can be obtained as the number of CRC = NG to the number of CRC results per a certain time period.

The condition detection unit 22 detects the packet loss rate as the condition of the terminal 2, and outputs a detected result to the encryption level determination unit 23 (step S404).

The encryption level determination unit 23 to which the packet loss rate is input obtains threshold information of the packet loss rate from the threshold table (FIG. 6) stored in the memory 40 (step S405).

The encryption level determination unit 23 performs threshold determination on the packet loss rate (step S406). Here, it is assumed that the packet loss rate is not less than 75%. Then, the encryption level determination unit 23 determines the encryption level as level 0 (no encryption).

Subsequent processing is similar to the processing of step S217 and subsequent steps of FIGS. 10A and 10B.

### [Seventh embodiment]

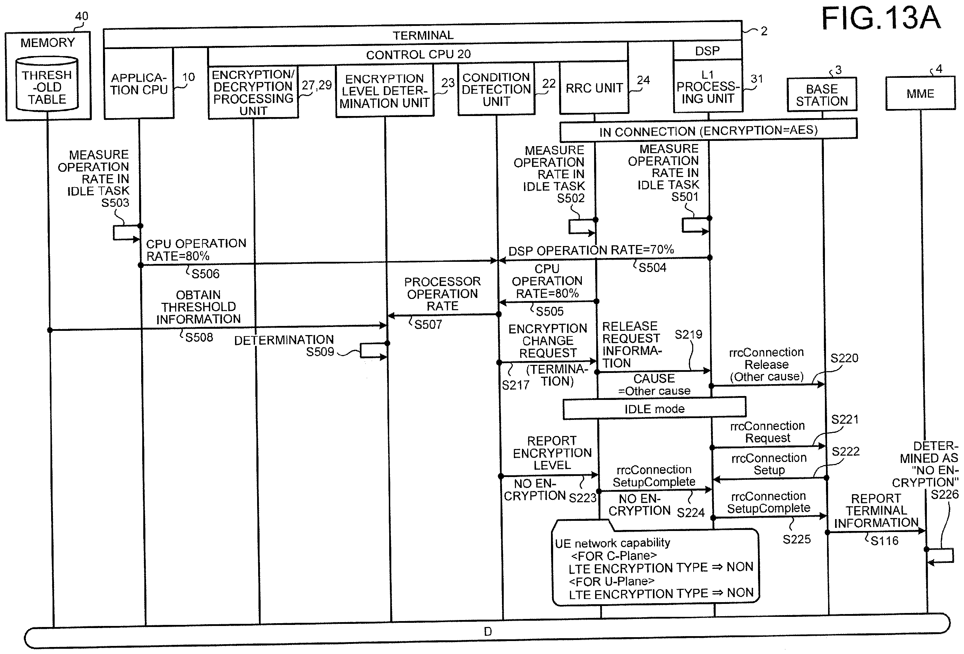

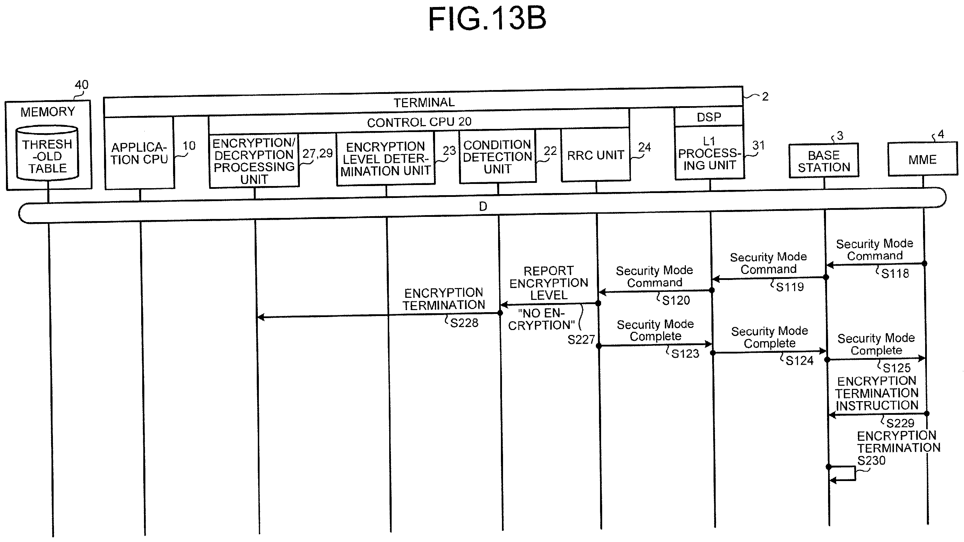

FIGS. 13A and 13B are sequence diagrams illustrating exemplary processing operation of the communication system according to a seventh embodiment. FIGS. 13A and 13B illustrate sequences following the sequences of FIGS. 9A and 9B.

While the terminal 2 and the base station 3 are in connection with each other using AES, the L1 processing unit 31 measures a DSP operation rate in an idle task (step S501), and outputs a measurement result (DSP operation rate = 70%) to the condition detection unit 22 through the RRC unit 24 (step S504). The RRC unit 24 measures an operation rate of the control CPU 20 in the idle task (step S502), and outputs a measurement result (CPU operation rate = 80%) to the condition detection unit 22 (step S505). The application CPU 10 measures an operation rate of the application CPU 10 in the idle task (step S503), and outputs a measurement result (CPU operation rate = 80%) to the condition detection unit 22 through the network interface layer processing unit 21 and the RRC unit 24 (step S506).

The condition detection unit 22 detects the operation rates of the processors as the condition of the terminal 2, and outputs, to the encryption level determination unit 23, a maximum value of a plurality of operation rates or an average value of the plurality of operation rates, as a detected result (step S507).

The encryption level determination unit 23 to which the processor operation rate is input obtains threshold information of the processor operation rate from the threshold table (FIG. 6) stored in the memory 40 (step S508).

The encryption level determination unit 23 performs threshold determination on the processor operation rate (step S509). When it is assumed that the maximum value of the above-mentioned three operation rates 70%, 80%, and 80% is the detected result of the condition detection unit 22, the processor operation rate is not less than 80%, so that the encryption level determination unit 23 determines the encryption level as level 0 (no encryption).

Subsequent processing is similar to the processing of step S217 and subsequent steps of FIGS. 10A and 10B.

### [Eighth embodiment]

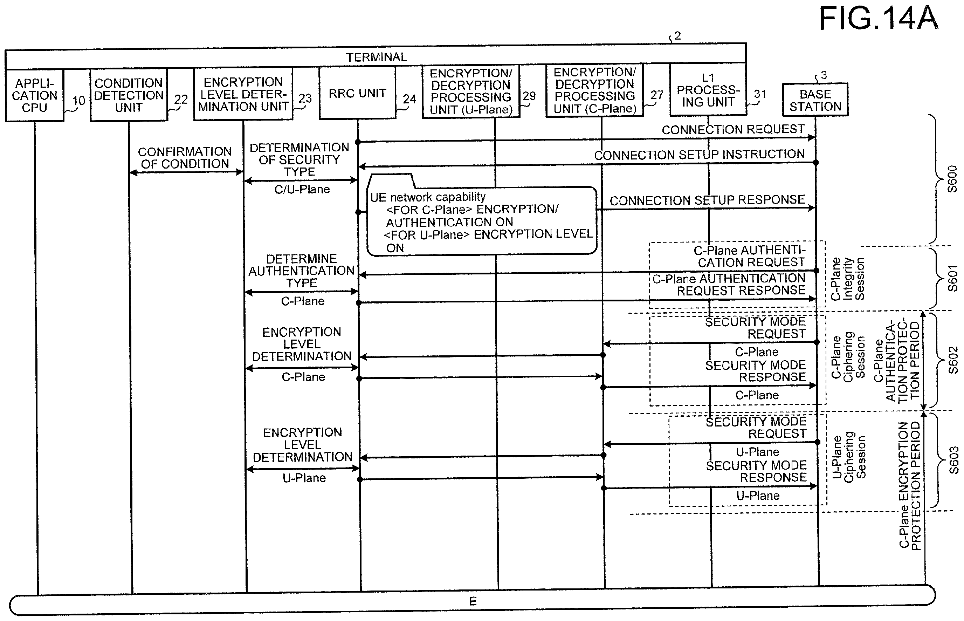

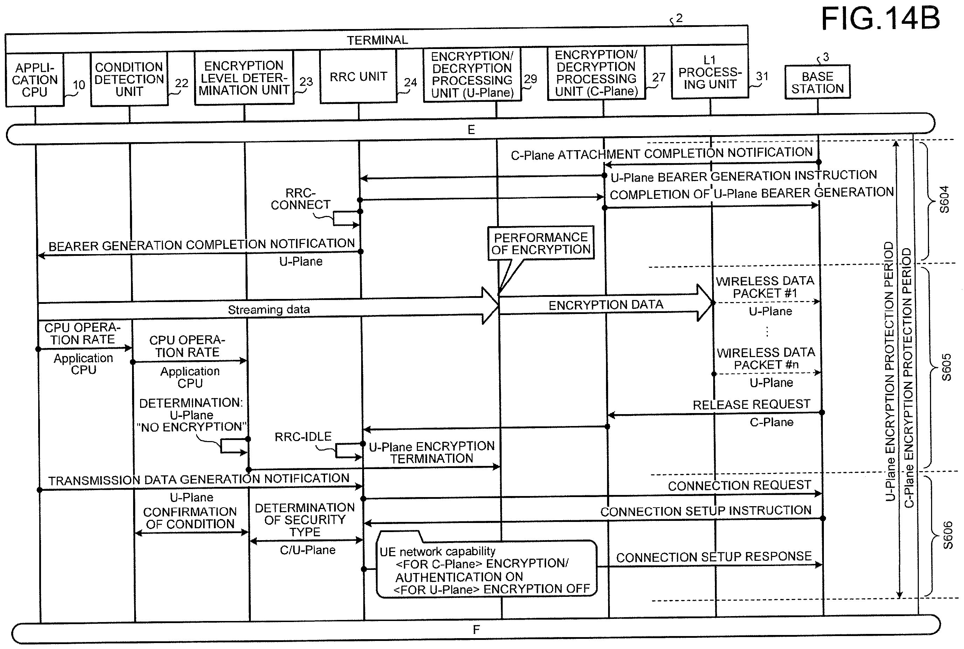

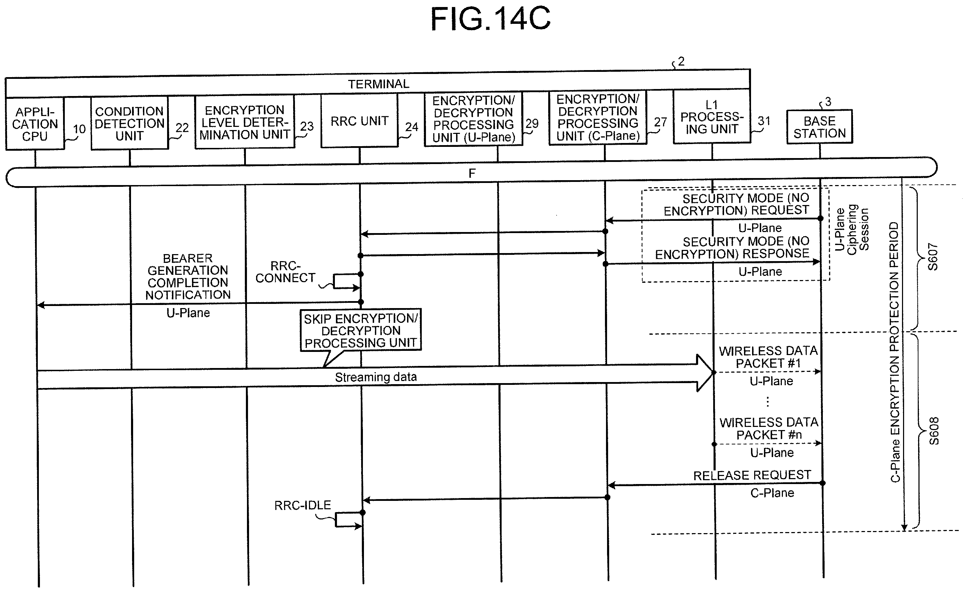

FIGS. 14A to 14C are sequence diagrams illustrating exemplary processing operations of the communication system according to an eighth embodiment. Sequences of FIGS. 14A to 14C are broadly divided into a sequence relating to the C-plane and a sequence relating to the U-plane. However, in FIGS. 14A to 14C, a sequence between the base station 3 and the MME 4 is omitted for clear description. The* sequence between the base station 3 and the MME 4 in the eighth embodiment is similar to the sequences in the third to seventh embodiments.

In step S600, in response to the connection request from the RRC unit 24, the base station 3 returns a connection setup instruction, and the RRC unit 24 transmits a connection setup response to the connection setup instruction. The connection setup response includes the capability list. Here, in the capability list, encryption and authentication are performed in the C-plane (encryption/authentication ON), and encryption level is selected in the U-plane (encryption level ON). The capability list is generated according to confirmation of the condition of the terminal 2 performed by the condition detection unit 22 and the encryption level determination unit 23, and determination of a security type performed by the encryption level determination unit 23 and the RRC unit 24.

In step S601, in response to a C-plane authentication request from the base station 3, an authentication type of the C-plane is determined by the RRC unit 24 and the encryption level determination unit 23, and a determination result is transmitted to the base station 3, as a response to the C-plane authentication request response. The processing between the terminal 2 and the base station 3 in step S601 corresponds to C-plane Integrity Session.

In step S602, in response to a C-plane security mode request from the base station 3, the encryption level is determined by the encryption level determination unit 23 and the RRC unit 24, and a security mode response including a determination result is transmitted to the base station 3. A period of step S602 is a C-plane authentication protection period, and processing between the terminal 2 and the base station 3 in step S602 corresponds to a C-plane Ciphering Session.

A period of step S603 and subsequent steps is a C-plane encryption protection period, and in the period of step S603 and subsequent steps, the C-plane data is all encrypted. In step S603, in response to a U-plane security mode request from the base station 3, the encryption level is determined by the encryption level determination unit 23 and the RRC unit 24, and a security mode response including a determination result is transmitted to the base station 3. The processing between the terminal 2 and the base station 3 in step S603 corresponds to a U-plane Ciphering Session.

In step S604, a C-plane attachment completion notification and a U-plane bearer generation instruction are given from the base station 3, and, in response thereto, a U-plane bearer generation completion notification is transmitted from the terminal 2 to the base station 3. Further, the RRC unit 24 establishes an RRC connection, and outputs the U-plane bearer generation completion notification to the application CPU 10.

In step S605, streaming data is input to the encryption/decryption processing unit 29, from the application CPU 10 receiving the U-plane bearer generation completion notification, and the encryption/decryption processing unit 29 encrypts the streaming data. The encrypted data is transmitted as U-plane wireless data packets #1 to #n, to the base station 3. Further, the encryption level determination unit 23 to which the operation rate of the application CPU 10 is input performs threshold determination on the CPU operation rate. Here, it is assumed that the encryption level in the U-plane is decided as level 0 (no encryption), as a result of the threshold determination. Therefore, the encryption level determination unit 23 terminates encryption of the U-plane data in the encryption/decryption processing unit 29. Further, the RRC unit 24 receiving a C-plane release request from the base station 3 idles RRC.

In step S606, the RRC unit 24 receiving U-plane data generation notification from the application CPU 10 outputs a connection request to the base station 3. In response to the connection request, the base station 3 transmits the connection setup instruction to the terminal 2. In the terminal 2 receiving the connection setup instruction, the connection setup response is transmitted from the RRC unit 24. The connection setup response includes the capability list. Here, in the capability list, encryption and authentication are performed in the C-plane (encryption/authentication ON), and encryption is not performed in the U-plane (encryption OFF). Therefore, upon reception of the connection setup response by the base station 3, the U-plane encryption protection period ends. Therefore, in a period of step S607 and subsequent steps, the U-plane data is not encrypted. Further, the capability list is generated according to confirmation of the condition of the terminal 2 performed by the condition detection unit 22 and the encryption level determination unit 23, and determination of a security type performed by the encryption level determination unit 23 and the RRC unit 24.

In step S607, the U-plane security mode request is transmitted from the base station 3 to the terminal 2. The base station 3 has received a connection setup response for instruction of non-encryption of the U-plane from the terminal 2, in step S606. Therefore, in order to directly return the contents of the instruction in the connection setup response, to the terminal 2, the base station 3 transmits notification having the same contents as the contents of the connection setup response received from the terminal 2, i.e., a security mode request representing non-encryption of the U-plane, to the terminal 2. In response thereto, a security mode response is transmitted to the base station 3 from the terminal 2. Further, the RRC unit 24 receiving the security mode request establishes RRC connection, and outputs a U-plane bearer generation completion notification to the application CPU 10. The processing between the terminal 2 and the base station 3 in step S607 corresponds to the U-plane Ciphering Session.

In step S608, streaming data is input to the U-plane processing unit 28 (FIG. 8) from the application CPU 10 receiving the U-plane bearer generation completion notification. However, the encryption/decryption processing unit 29 does not perform encryption of the streaming data. Therefore, the data not encrypted is transmitted to the base station 3, as U-plane wireless data packets #1 to #n. Then, the RRC unit 24 receiving the C-plane release request from the base station 3 idles RRC.

As described above, in the present embodiment, a C-plane data encryption period and a U-plane data encryption period can be made different. Therefore, in a specific period, both of the C-plane data and the U-plane data can be encrypted, and in a period other than the specific period, only the C-plane data can be encrypted.

In the third to eighth embodiments, description has been made of the exemplary sequences of the processing operations of the communication system 1 including the processing operation of the terminal 2 illustrated in FIG. 8.

### [Ninth embodiment]

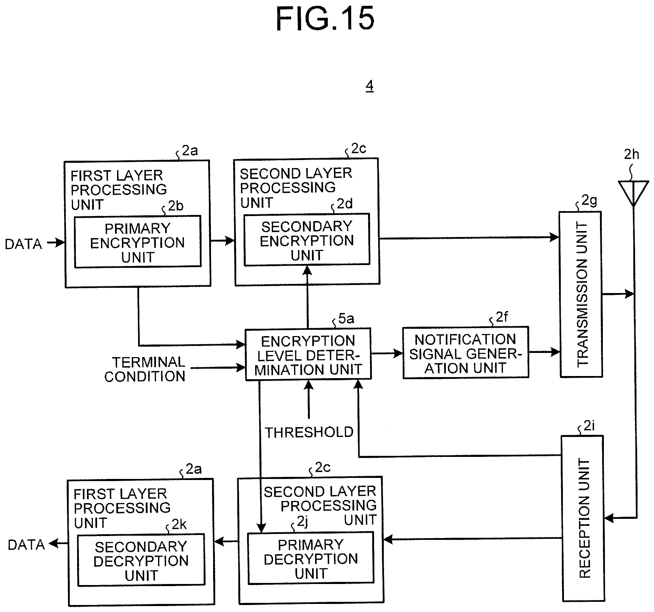

FIG. 15 is a diagram illustrating an exemplary configuration of a terminal according to a ninth embodiment. In FIG. 15, the terminal 4 includes an encryption level determination unit 5a.

An encryption processing condition of the primary encryption unit 2b is input from the first layer processing unit 2a, to the encryption level determination unit 5a.
The encryption processing condition is a condition representing whether the encryption in the first layer is performed in the primary encryption unit 2b, i.e., presence or absence of the encryption in the first layer.

The encryption level determination unit 5a determines the encryption level, according to the presence or absence of the encryption in the first layer. When the encryption in the first layer is not performed, the encryption level determination unit 5a performs the encryption and decryption in the second layer reliably.
For example, when the encryption in the first layer is not performed, the encryption level determination unit 5a determines the encryption level of the secondary encryption unit 2d and the decryption level of the primary decryption unit 2j, as a maximum allowable level of the capability of the terminal 4. That is, when the encryption in the first layer is not performed, the encryption level of the secondary encryption unit 2d and the decryption level of the primary decryption unit 2j are determined as level 3 (SNOW-3G) of the four encryption levels illustrated in FIG. 6. Whereas, when the encryption in the first layer is performed, the encryption level determination unit 5a determines the encryption level according to the condition of the terminal 4, similarly to the first embodiment.

As described above, the encryption level in the second layer is determined according to the presence or absence of encryption in the first layer, so that encryption can be performed reliably, in any of the first layer and the second layer. Further, when encryption is performed in the first layer, the encryption level of the second layer can be reduced below the maximum level, according to the condition of the terminal 4. Therefore, power can be saved in encryption, while maintaining confidentiality of data.

### [Other embodiments]

[1] Each processing in the above description can be achieved by causing the application CPU 10 or the control CPU 20 to execute a prepared program. For example, a program corresponding to each processing in the above description may be previously stored in the memory 40 to be read from the memory 40 and executed by the application CPU 10 or the control CPU 20.
[2] In addition to the above, as the parameter for determining the encryption level, a remaining battery level of the terminal, occupancy of a buffer for buffering the U-plane data, or the like can be employed.
[3] The encryption level may be determined according to user's selection of a power saving mode. For example, when a mode for reduced power saving is selected by the user, both of the C-plane data and the U-plane data are encrypted in the PDCP layer. Whereas, when a mode for increased power saving is selected by the user, only the C-plane data is encrypted in the PDCP layer.
[4] The terminal may be referred to as "mobile station (MS)", "user equipment (UE)", or the like. The base station may be referred to as "evolved Node B (eNB)", "base station (BS)", "base transceiver station (BTS)", or the like.

### Explanation of Reference

- 1: COMMUNICATION SYSTEM
- 2: TERMINAL
- 3: BASE STATION
- 4: MME
- 2a: FIRST LAYER PROCESSING UNIT
- 2b: PRIMARY ENCRYPTION UNIT
- 2c: SECOND LAYER PROCESSING UNIT
- 2d: SECONDARY ENCRYPTION UNIT
- 2e, 4a, 23: ENCRYPTION LEVEL DETERMINATION UNIT
- 2f: NOTIFICATION SIGNAL GENERATION UNIT
- 2g: TRANSMISSION UNIT
- 2h, 60: ANTENNA
- 10: APPLICATION CPU
- 11: USER APPLICATION PROCESSING UNIT
- 12, 15, 27, 29: ENCRYPTION/DECRYPTION PROCESSING UNIT
- 13: TRANSPORT LAYER PROCESSING UNIT
- 14: INTERFACE LAYER PROCESSING UNIT
- 16, 21: NETWORK INTERFACE LAYER PROCESSING UNIT
- 22: CONDITION DETECTION UNIT
- 24: RRC UNIT
- 25: PDCP LAYER PROCESSING UNIT
- 26: C-Plane PROCESSING UNIT
- 28: U-Plane PROCESSING UNIT
- 30: DATA INTEGRATION LAYER PROCESSING UNIT
- 31: L1 PROCESSING UNIT
- 40: MEMORY
- 50: RF CIRCUIT

## Claims

1. A terminal device (2) configured to use a protocol stack including a first layer and a second layer, the second layer being a lower layer than the first layer, the terminal device (2) comprising:
a first encryption unit (2a) configured to perform first encryption only to user plane data out of the user plane data and control plane data in the first layer;
a second encryption unit (2c) configured to perform second encryption to both of the user plane data, to which the first encryption has been performed in the first layer, and the control plane data in the second layer;
a determination unit (2e) configured, in the second layer, to determine an encryption level of the user plane data, to which the second encryption will be performed in the second layer, according to at least one of a radio quality between the terminal device (2) and a base station (3), a Redirection count, an operation rate of a processor included in the terminal device (2), a packet loss rate and a count of handover caused by a handover command, and to determine an encryption level of the control plane data as a maximum allowable level of a capability of the terminal device (2).

2. The terminal device (2) according to claim 1, wherein
the determination unit (2e) is configured to make the encryption level of the user plane data lower as the radio quality gets worse.

3. The terminal device (2) according to claim 1, wherein
the determination unit (2e) is configured to make the encryption level of the user plane data lower as the Redirection count is increased.

4. The terminal device (2) according to claim 1, wherein
the determination unit (2e) is configured to make the encryption level of the user plane data lower as the operation rate is increased.

5. The terminal device (2) according to claim 1, wherein
the determination unit (2e) is configured to makes the encryption level of the user plane data lower as the packet loss rate is increased.

6. The terminal device (2) according to claim 1, wherein
the determination unit (2e) is configured to not change the encryption level of the user plane data, when the count of handover is not less than a threshold.

7. A communication system (1) comprising:
the terminal device (2) according to claim 1; and
a base station (3), wherein
the terminal device (2) further includes:
a generation unit (2f) configured to generate terminal capability information according to the determined encryption level;
a transmission unit (2g) configured to transmit the generated terminal capability information to the base station; and
a reception unit (2i) configured to receive setting information according to the encryption level, from the base station, in response to transmission of the terminal capability information, and
the base station (3) includes:
a reception unit (3b) configured to receive the terminal capability information from the terminal device; and
a transmission unit (31) configured to transmit, to the terminal device, the setting information generated based on the terminal capability information.

8. A communication control program executed in a terminal device (2) using a protocol stack including a first layer and a second layer, the second layer being a lower layer than the first layer, the communication control program causing the terminal device to perform operations of:
performing first encryption only to user plane data out of the user plane data and control plane data in the first layer;
performing second encryption to both of the user plane data, to which the first encryption has been performed in the first layer, and the control plane data in the second layer;
in the second layer, determining an encryption level of the user plane data, to which the second encryption will be performed in the second layer, according to at least one of a radio quality between the terminal device and a base station (3), a Redirection count, an operation rate of a processor included in the terminal device, a packet loss rate and a count handover caused by a handover command; and
in the second layer, determining an encryption level of the control plane data as a maximum allowable level of a capability of the terminal device.

## Patentansprüche

1. Endgerätevorrichtung (2), konfiguriert zum Verwenden eines Protokoll-Stacks mit einer ersten Schicht und einer zweiten Schicht, wobei die zweite Schicht eine niedrigere Schicht als die erste Schicht ist, wobei die Endgerätevorrichtung (2) umfasst:
eine erste Verschlüsselungseinheit (2a), konfiguriert zum Durchführen einer ersten Verschlüsselung nur an Benutzerebenendaten von den Benutzerebenendaten und Steuerebenendaten in der ersten Schicht;
eine zweite Verschlüsselungseinheit (2c), konfiguriert zum Durchführen einer zweiten Verschlüsselung an sowohl den Benutzerebenendaten, an denen die erste Verschlüsselung in der ersten Schicht durchgeführt wurde, und den Steuerebenendaten in der zweiten Schicht;
eine Bestimmungseinheit (2e), konfiguriert, in der zweiten Schicht, zum Bestimmen eines Verschlüsselungspegels der Benutzerebenendaten, an denen die zweite Verschlüsselung in der zweiten Schicht durchgeführt werden wird, in Übereinstimmung mit zumindest einem von einer Funkqualität zwischen der Endgerätevorrichtung (2) und einer Basisstation (3), einer Umleitungsanzahl, einem Betriebszustand eines in der Endgerätevorrichtung (2) enthaltenen Prozessors, einer Paketverlustrate und einer Anzahl von Handovern, die durch eine Handover-Anweisung bewirkt werden, und zum Bestimmen eines Verschlüsselungspegels der Steuerebenendaten als einen maximal erlaubten Pegel einer Leistungsfähigkeit der Endgerätevorrichtung (2).

2. Endgerätevorrichtung (2) nach Anspruch 1, wobei die Bestimmungseinheit (2e) konfiguriert ist, den Verschlüsselungspegel der Benutzerebenendaten geringer zu machen, wenn die Funkqualität schlechter wird.

3. Endgerätevorrichtung (2) nach Anspruch 1, wobei die Bestimmungseinheit (2e) konfiguriert ist, den Verschlüsselungspegel der Benutzerebenendaten geringer zu machen, wenn die Umleitungsanzahl erhöht wird.

4. Endgerätevorrichtung (2) nach Anspruch 1, wobei die Bestimmungseinheit (2e) konfiguriert ist, den Verschlüsselungspegel der Benutzerebenendaten geringer zu machen, wenn die Betriebsrate erhöht wird.

5. Endgerätevorrichtung (2) nach Anspruch 1, wobei die Bestimmungseinheit (2e) konfiguriert ist, den Verschlüsselungspegel der Benutzerebenendaten geringer zu machen, wenn die Paketverlustrate erhöht wird.

6. Endgerätvorrichtung (2) nach Anspruch 1, wobei die Bestimmungseinheit (2e) konfiguriert ist, den Verschlüsselungspegel der Benutzerebenendaten nicht zu ändern, wenn die Anzahl der Handover nicht geringer als ein Schwellenwert ist.

7. Kommunikationssystem (1), umfassend:
die Endgerätevorrichtung (2) nach Anspruch 1; und
eine Basisstation (3), wobei
die Endgerätevorrichtung (2) ferner enthält:
eine Erzeugungseinheit (2f), konfiguriert zum Erzeugen einer Endgeräteleistungsfähigkeitsinformation gemäß dem bestimmten Verschlüsselungspegel;
eine Sendeeinheit (2g), konfiguriert zum Senden der erzeugten Endgerätleistungsfähigkeitsinformation an die Basisstation; und
eine Empfangseinheit (2i), konfiguriert zum Empfangen einer Einstellinformation gemäß dem Verschlüsselungspegel, von der Basisstation, ansprechend auf ein Senden der Endgeräteleistungsfähigkeitsinformation, und
wobei die Basisstation (3) enthält:
eine Empfangseinheit (3b), konfiguriert zum Empfangen der Endgerätleistungsfähigkeitsinformation von der Endgerätevorrichtung; und
eine Sendeeinheit (31), konfiguriert zum Senden, an die Endgerätevorrichtung, der Einstellinformation, die auf Grundlage der Endgeräteleistungsfähigkeitsinformation erzeugt wird.

8. Kommunikationssteuerprogramm, das ausgeführt wird in einer Endgerätevorrichtung (2) unter Verwendung eines Protokoll-Stacks mit einer ersten Schicht und einer zweiten Schicht, wobei die zweite Schicht eine niedrigere Schicht als die erste Schicht ist, wobei das Kommunikationssteuerprogramm bewirkt, dass die Endgerätevorrichtung Schritte durchführt zum:
Durchführen einer ersten Verschlüsselung nur an Benutzerebenendaten von den Benutzerebenendaten und Steuerebenendaten in der ersten Schicht;
Durchführen einer zweiten Verschlüsselung an sowohl den Benutzerebenendaten, an denen die erste Verschlüsselung in der ersten Schicht durchgeführt wurde, und den Steuerebenendaten der zweiten Schicht;
in der zweiten Schicht, Bestimmen eines Verschlüsselungspegels der Benutzerebenendaten, an denen die zweite Verschlüsselung in der zweiten Schicht durchgeführt werden wird, in Übereinstimmung mit zumindest einem von einer Funkqualität zwischen der Endgerätevorrichtung und einer Basisstation (3), einer Umleitungsanzahl, einem Betriebszustand eines in der Endgerätevorrichtung enthaltenen Prozessors, einer Paketverlustrate und einer Anzahl von Handovern, die durch eine Handover-Anweisung bewirkt werden; und
in der zweiten Schicht, Bestimmen eines Verschlüsselungspegels der Steuerebenendaten als einen maximal erlaubter Pegel einer Leistungsfähigkeit der Endgerätevorrichtung.

## Revendications

1. Dispositif terminal (2) configuré pour utiliser une pile de protocoles incluant une première couche et une seconde couche, la seconde couche étant une couche inférieure à la première couche, le dispositif terminal (2) comprenant :
une première unité de chiffrement (2a) configurée pour effectuer un premier chiffrement uniquement sur des données de plan utilisateur parmi les données de plan utilisateur et des données de plan contrôle dans la première couche ;
une seconde unité de chiffrement (2c) configurée pour effectuer un second chiffrement à la fois sur les données de plan utilisateur, sur lesquelles le premier chiffrement a été effectué dans la première couche, et sur les données de plan contrôle dans la seconde couche ;
une unité de détermination (2e) configurée, dans la seconde couche, pour déterminer un niveau de chiffrement des données de plan utilisateur, sur lesquelles le second chiffrement sera effectué dans la seconde couche, en fonction d'au moins un parmi une qualité radio entre le dispositif terminal (2) et une station de base (3), un compte de Redirection, un taux d'opération d'un processeur inclus dans le dispositif terminal (2), un taux de perte de paquets et un compte de transfert causé par une commande de transfert, et pour déterminer un niveau de chiffrement des données de plan contrôle comme un niveau maximum admissible d'une capacité du dispositif terminal (2).

2. Dispositif terminal (2) selon la revendication 1, dans lequel
l'unité de détermination (2e) est configurée pour rendre le niveau de chiffrement des données de plan utilisateur plus bas à mesure que la qualité radio empire.

3. Dispositif terminal (2) selon la revendication 1, dans lequel
l'unité de détermination (2e) est configurée pour rendre le niveau de chiffrement des données de plan utilisateur plus bas à mesure que le compte de Redirection est augmenté.

4. Dispositif terminal (2) selon la revendication 1, dans lequel
l'unité de détermination (2e) est configurée pour rendre le niveau de chiffrement des données de plan utilisateur plus bas à mesure que le taux d'opération est augmenté.

5. Dispositif terminal (2) selon la revendication 1, dans lequel
l'unité de détermination (2e) est configurée pour rendre le niveau de chiffrement des données de plan utilisateur plus bas à mesure que le taux de perte de paquets est augmenté.

6. Dispositif terminal (2) selon la revendication 1, dans lequel
l'unité de détermination (2e) est configurée pour ne pas changer le niveau de chiffrement des données de plan utilisateur, lorsque le compte de transfert n'est pas inférieur à un seuil.

7. Système de communication (1) comprenant :
le dispositif terminal (2) selon la revendication 1 ; et
une station de base (3), dans lequel
le dispositif terminal (2) inclut en outre :
une unité de génération (2f) configurée pour générer des informations de capacité de terminal en fonction du niveau de chiffrement déterminé ;
une unité de transmission (2g) configurée pour transmettre les informations de capacité de terminal générées à la station de base ; et
une unité de réception (2i) configurée pour recevoir des informations de réglage en fonction du niveau de chiffrement, en provenance de la station de base, en réponse à la transmission des informations de capacité de terminal, et
la station de base (3) inclut :
une unité de réception (3b) configurée pour recevoir les informations de capacité de terminal en provenance du dispositif terminal ; et
une unité de transmission (31) configurée pour transmettre, au dispositif terminal, les informations de réglage générées sur la base des informations de capacité de terminal.

8. Programme de contrôle de communication exécuté dans un dispositif terminal (2) utilisant une pile de protocoles incluant une première couche et une seconde couche, la seconde couche étant une couche inférieure à la première couche, le programme de contrôle de communication amenant le dispositif terminal à effectuer des opérations consistant à :
effectuer un premier chiffrement uniquement sur des données de plan utilisateur parmi les données de plan utilisateur et des données de plan contrôle dans la première couche ;
effectuer un second chiffrement à la fois sur les données de plan utilisateur, sur lesquelles le premier chiffrement a été effectué dans la première couche, et sur les données de plan contrôle dans la seconde couche ;
dans la seconde couche, déterminer un niveau de chiffrement des données de plan utilisateur, sur lesquelles le second chiffrement sera effectué dans la seconde couche, en fonction d'au moins un parmi une qualité radio entre le dispositif terminal et une station de base (3), un compte de Redirection, un taux d'opération d'un processeur inclus dans le dispositif terminal, un taux de perte de paquets et un compte de transfert causé par une commande de transfert ; et
dans la seconde couche, déterminer un niveau de chiffrement des données de plan contrôle comme un niveau maximum admissible d'une capacité du dispositif terminal.
